# EUROPEAN PATENT SPECIFICATION

(11) **EP 0 621 236 B1**
(45) Date of publication and mention of the grant of the patent: **04.03.1998**
(21) Application number: 93923663.4
(22) Date of filing: 28.10.1993
(51) Int. Cl.: C01B 31/00, C10M 103/02, H01B 1/06, G03G 9/08, G03G 9/10, C08K 3/16, C23C 24/00, C09D 7/12, C10M 171/06, G03G 15/20, C08J 3/20, C04B 41/85, H01M 4/86, H01M 4/96

(54) **CARBON FLUORIDE PARTICLES, PROCESS FOR PRODUCING THE SAME, AND USE THEREOF**
KOHLENSTOFF-FLUORIDTEILCHEN, VERFAHREN ZU IHRER HERSTELLUNG, UND IHRE VERWENDUNG
PARTICULES DE FLUORURE DE CARBONE, LEUR PROCEDE DE PRODUCTION, ET UTILISATION DE CES PARTICULES

(30) Priority: 06.11.1992 JP 297450/92; 25.12.1992 JP 347165/92; 21.01.1993 JP 8188/93
(43) Date of publication of application: 26.10.1994
(73) Proprietor: DAIKIN INDUSTRIES, LIMITED, Osaka-shi Osaka 530 (JP)
(72) Inventor: YAMANA, Masayuki, Yodogawa-seisakusho, Settsu-shi, Osaka 566 (JP); KITAHARA, Takahiro, Yodogawa-seisakusho, Settsu-shi, Osaka 566 (JP); ISOGAI, Tomohiro, Yodogawa-seisakusho, Settsu-shi, Osaka 566 (JP)
(74) Representative: Hansen, Bernd, Dr. Dipl.-Chem.
(86) International application number: JP9301568
(87) International publication number: WO9411301

(56) References cited:
- JP-A- 2 151 872
- JP-A-50 143 975
- JP-A-55 140 706
- JP-A-57 196 477
- JP-A-58 209 769
- JP-A-60 048 050
- JP-A-62 139 255

## Description

### TECHNICAL FIELD

The present invention relates to novel carbon fluoride particles, a preparation process of such carbon fluoride particles, and their use for water- and oil-repellents, non-tackifying agents, solid lubricants, agents for imparting electric conductivity, composite materials of various forms, additives to toners and additives to carrier coating for developing electrostatic images, fixing rollers, phosphoric acid fuel cells, zinc/air batteries, and nickel/metal hydride batteries.

### BACKGROUND ART

Carbon fluorides can be prepared by fluorinating various carbon powder materials, and are obtained as solid powders. Since carbon fluorides have an extremely low surface energy and can exhibit their excellent characteristics under severe conditions regardless of the atmospheric environment, the carbon fluorides have been regarded as excellent industrial materials in wide technical fields such as water- and oil-repellents, mold-releasing compounds, non-tackifying agents and solid lubricants.

When utilizing the said excellent properties of the carbon fluorides, the carbon fluorides are generally added and dispersed into materials such as resins and rubbers, dispersed into oils, greases, organic solvents or aqueous solutions, or used in the form of fine particle composites with other powders rather than using the carbon fluoride powder alone as such.

However, when utilizing the above-mentioned various excellent properties by composing the carbon fluoride powder with other materials, a problem arises from the difficulty to disperse the powder uniformly and stable within the other materials, and accordingly, the desired properties are not obtained sufficiently.

The reason for this problem is that commercially available common conventional carbon fluoride particles are highly fluorinated throughout the inner portion to provide particles which are in whole in the form of carbon fluoride. This results in (1) the specific gravity becoming high with values in the rage from 2.5 to 3.0, and (2) the particles being broken irregularly during the fluorinating step due to stress in the whole particle in order to produce a very wide particle size distribution and to create irregular particle shapes (due to widening of the (001) plane of carbon fluoride up to 0.6 - 0.9 nm in course of the fluorination process in comparison with the (001) plane spacing of microcrystalline graphite, which is 0.34 nm). Therefore, the wholly fluorinated carbon fluoride does not have the desired properties with regard to dispersibility ad powder flowability.

If carbon fluoride particles with a low specific gravity and a narrow particle size distribution could be obtained, such carbon fluoride particles would be advantageous in view that a difference of specific gravity compared to a dispersing medium may be made small to improve the dispersibility. As a example for carbon fluoride particles with a low specific gravity, JP-A-142968/1975 discloses carbon fluoride particles having a fluorine content of 35 to 55 % by weight [corresponding to an atomic ratio of fluorine atoms to carbon atoms (hereinafter referred to as "F/C") of 0.34 to 0.77].

However, the carbon fluoride particles having such a high F/C within the above-mentioned range exhibit a maximal (001) plane spacing in the crystals and thus, as mentioned above, the particles tend to break. Therefore, when dispersing the particles into other materials, there remains a problem as to dispersibility and the excellent lubrication properties cannot be obtained.

Further, it is known that modified carbon materials for composite materials may be prepared by treating the carbon surface with a fluorine gas at -80° to 50°C (JP-B-38686/1992). However, no real carbon fluoride is obtained at the surface of the material, but only a weak semi-ionic C-F bond which contributes to hydrophilic properties. Accordingly, the treated carbon (fluoride) does not exhibit the water-repelling property which is typical for actual carbon fluoride. In contrast, it becomes more hydrophilic than the carbon material as such (Proceedings of 16th Fluorine Chemistry Conference, p16 (Sept.. 20, 1991), 17th Proceedings of Fluorine Chemistry Conference p21-22 (Sept.. 21, 1992)).

Also known is a graphite material for a atomic reactor, which comprises a carbon fluoride at a part or all of its surface region or in pores of the surface layer (JP-B-31283/1981). This prior art is directed to graphite moldings, and is from a different technical field than carbon fluoride used as additive to other materials.

The present invention has been performed starting from the above-discussed viewpoints. One object is to provide novel carbon fluoride particles having excellent dispersibility and powder flowability and further a controllable conductivity ad charging properties (which are not obtainable with the conventional carbon fluoride particles) and thereby maintaining sufficient water-repelling properties, oil-repelling properties, lubricating properties, non-adhesion, non-wetting properties and stain resistance (which is characteristic for conventional carbon fluoride particles), said carbon fluoride particles having a low specific gravity, a F/C as a whole at a low level ad the F/C at the particle surface at a high level.

Another object of the present invention is to provide a process for preparing such novel carbon fluoride particles in which process the amount of expensive fluorine gas needed may be reduced.

A further object of the present invention is to provide uses of the novel carbon fluoride, i.e. as a water- and oil-repellent, as a non-tackifying agent, as a solid lubricant ad as a agent for imparting electric conductivity.

A further object of the present invention is to provide a composite material which is composed with various other materials in various manners.

Another object of the present invention is to provide a additive for toners which gives excellent effects in regard to that the amount of toner adhering to the carrier surface for developing electrostatic images is reduced and that cleaning properties of the toner remaining on the surface of a photoreceptor is improved.

A further object of the present invention is to provide a additive to carrier coatings in order to produce a carrier for developing electrostatic images, which is excellent in respect to abrasion resistance and toner-spent properties and which does not lead to irregularities in toner charge.

Another object of the present invention is to provide a fixing roller for developing electrostatic images, which does not cause both, the hot offset and electrostatic offset.

Another object of the present invention is to provide a gas diffusion electrode for a phosphoric acid fuel cell or an air battery, which has a small internal resistance and a long life.

A further object of the present invention is to provide an alkaline battery using a hydrogen-absorbing alloy, which is excellent in rapid charging and has a long durability.

### DISCLOSURE OF THE INVENTION

The present invention relates to carbon fluoride particles in which the number-average particle size is 0.01 to 50 µm, the content of particles having such a diameter that the particle size distribution falls within the range of the number-average particle size +/-20 % amounts to at least 50 % of the hole, in which the true specific gravity of the particles is 1.7 to 2.5, in which the F/C ratio of the particles as a whole is 0.001 to 0.5, preferably 0.001 to 0.3, particularly preferably 0.001 to 0.2, and in which the F/C ratio at the surface of the particles is always larger than the F/C as a whole and is 0.1 to 2.0, preferably 0.3 to 2.0.

The present invention also relates to a process for preparing carbon fluoride particles, which comprises pre-heating at 350° to 600°C a carbon powder with a number-average particle size of 0.01 to 50 µm and with a content of particles having such a diameter that the particle size distribution falls within the range of the number-average particle size +/-20 % amounting to at least 50 % of the whole, introducing a fluorine gas, and then reacting the carbon particles with the fluorine gas at a temperature of the above-mentioned range.

The present invention relates to various uses of the above carbon fluoride particles, for example, for a water- and oil-repellent, a non-tackifying agent, a solid lubricant, an agent for imparting electric conductivity, an additive to coatings of carriers for developing electrostatic images, a composite material combined with other materials and a fine composite particle coated with other materials; and, using the above-mentioned materials, a fixing roller, a gas diffusion electrode, a phosphoric acid fuel cell, an air battery and an alkaline battery.

The present invention relates in particular to an additive to toners for developing electrostatic images comprising carbon fluoride particles as defined above.

### BRIEF EXPLANATION OF THE DRAWINGS

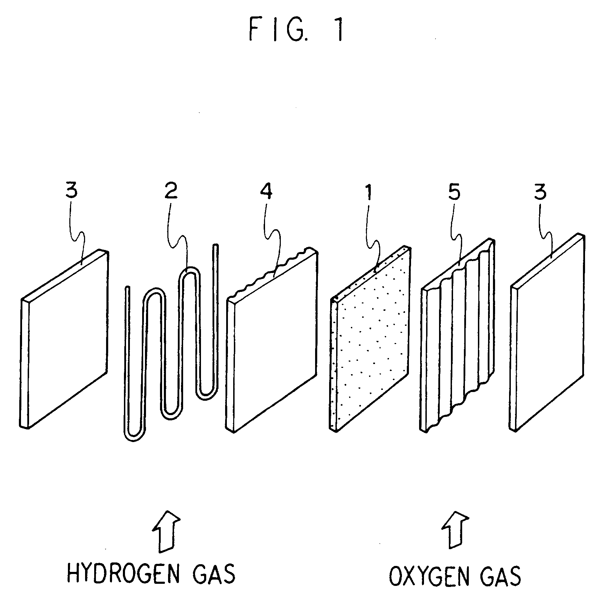

Fig. 1 shows a diagrammatic perspective view of one embodiment of the construction of a phosphoric acid fuel cell according to the present invention.

### PREFERRED EMBODIMENTS OF THE INVENTION

The carbon fluoride particles of the present invention are particles having so-called core-shell structure, and comprise a core portion substantially made of carbon and a shell portion which is thin and has a large content of carbon fluorine, the F/C of the shell portion being always larger than that of the core.

The reason for the carbon fluoride particles of the present invention being difficult to be broken despite of the large F/C of the shell portion, is assumed to be that since the carbon fluoride is present in a relatively large amount in the shell portion, the stress stops only near the surface region, and as explained in the discussion of the background prior art, the stress does not go into the deep portion, and thus the breakage (cleavage) will not span the whole particle.

The carbon fluoride obtained according to the present invention does not have a clear peak at and near the angle of diffraction corresponding to the (001) plane by means of X-ray diffractometry, and even if a peak is observed, such a peak is broad. It is assumed that, depending on the kind of starting carbon, a sharp peak may not be observed because the carbon fluoride exists only thinly in the surface region of the particles.

The carbon fluoride in the present invention is generally obtainable by reacting various carbon materials with fluorine, and substantially comprises an inorganic polymer carbon fluoride in which the carbon atoms are chemically, covalent bonded.

The carbon fluoride particles of the present invention have a number-average particle size of 0.01 to 50 µm. If the number-average particle size becomes smaller, a secondary agglomeration tends to occur strongly, and thus, when applying, it is difficult to disperse the particles uniformly in the materials. If it is larger, dispersibility becomes worse. A preferred range is 0.01 to 20 µm, a more preferred rage is 0.1 to 10 µm.

In the present invention, the particle size distribution and the number-average particle size are determined in the following manners.

Particle sizes of randomly selected 100 particles are measured in a scanning electron microscope photograph. From the number of particles of each particle size a particle size distribution is obtained. Then a number-average particle size is calculated from the particle size distribution.

The carbon fluoride particles of the present invention have a particle size distribution such that the content of particles having such a diameter that the particle size distribution falls within the range of the number-average particle size +/-20 % amounts to at least 50 % of the whole. If the particle size distribution becomes wider, F/C as a whole and F/C at the surface are not uniform, i.e. particles having too high or too low F/C are present in the mixture in addition to the particles having the desired F/C. A preferred particle size distribution corresponds to an amount of particles having such a diameter that the particle size distribution falls within the range of the number-average particle size +/-20 %, of at least 60 % of the whole, more preferably at least 70 % of the whole.

The carbon fluoride particles of the present invention have a true specific gravity of 1.7 to 2.5. The lower limit of the true specific gravity depends on a true specific gravity of the starting carbon. If the true specific gravity is above 2.5, the carbon fluoride particles cannot maintain a spherical shape and are inferior in dispersibility. A preferred true specific gravity is 1.7 to 2.3, more preferably 1.7 to 2.0.

The true specific gravity of the carbon fluoride particles is measured by means of a usual method described in Hideaki Chihara, "Butsurikagaku Jikkenho" 3rd ed. Tokyo Kagaku Dojin (1988) in which, for example, ethanol is used, and the particles are weighed in a pycnometer.

The F/C of the particles as a whole is between 0.001 and 0.5. If the F/C is smaller, the desired performance cannot be obtained, because the amount of carbon fluoride is not sufficient. If above 0.5, the particles begin to break and thus do not maintain a spherical shape, which results in bad dispersibility. A preferred F/C is 0.001 to 0.3, more preferably 0.001 to 0.2.

In the present invention, the F/C of the particle as a whole is measured as following.

Carbon fluoride particles are burned together with a combustion improver Na₂O₂ and a polyethylene film in a flask filled with oxygen and the produced hydrogen fluoride HF is absorbed in water. The amount of produced HF is measured with a fluoride ion specific electrode ion meter (Ion Analyzer 901 of Orion Corp.). From the measured value, regarding all the remaining portion of the carbon fluoride particle as carbon, a ratio F/C of the number of fluorine atoms to the number of carbon atoms is calculated. The obtained value is the F/C of the particle as a whole.

The F/C of the carbon fluoride particle at the surface is defined by values obtained using the following methode of measurement.

The F₁s spectrum (680 to 700 eV) and the C₁s spectrum (280 to 300 eV) of a carbon fluoride particle are measured with a X-ray photoelectron spectrometer (ESCA-750 of Shimadzu Co., Ltd.). From a ratio of areas in the charts corresponding to each spectrum, a ratio F/C of the number of fluorine atoms to the number of carbon atoms at the surface of the carbon fluoride particle is calculated.

The F/C at the surface is 0.1 to 2.0, preferably 0.3 to 2.0, more preferably 0.5 to 1.5.

The carbon fluoride particles of the present invention are excellent in dispersibility and powder flowability. These properties are ether improved if the shape of the particles is almost spherical. Generally, there is employed a degree of sphere which indicates how approximate a particle is spherical. The carbon fluoride particles of the present invention usually have a degree of sphere of 0.5 to 1.0, preferably of 0.8 to 1.0.

The degree of sphericity of the carbon fluoride particles according the present invention is defined by the quotient of the circumference of a circle, which has the same area of a projected image of a particle, over the circumference of the projected image of the particle, and is specifically described in Kiichiro Kubo et al. "Funtai Riron to Oyo" 2nd ed. p50. Maruzen (1979). As an exemplified method, it can be measured by using an image analyzer (TVIP-4100 II of Nippon Avionics Co., Ltd.). If a particle is perfectly spherical the degree of sphericity is 1.0. If particle is flattened or irregular, the degree of sphericity becomes small.

The preparation of the carbon fluoride particles of the present invention can be carried out by pre-heating (to temperatures from 350° to 600°C) carbon particles in which the number-average particle size is 0.01 to 50 µm and the content of particles having such a diameter that the particle size distribution falls within the rage of the number-average particle size +/-20 % amounts to at least 50 % of the whole, introducing a fluorine gas, and reacting the carbon particles with fluorine at a temperature of the above-mentioned rage for a given reaction time to fluorinate the carbon particles.

In the present invention, the reason for pre-heating the carbon particles to the reaction temperature is to fluorinate the surface of the carbon particle within a short time at a constant temperature. If the pre-heating is not carried out, the carbon particles are gradually fluorinated from a low temperature, and carbon fluoride particles of the present invention are not obtained.

In the process of the present invention, the carbon particles having the given properties are fluorinated at about 350°C to about 600°C for a given time in the presence of fluorine. If the reaction temperature is lower than about 350°C , the surface of the carbon particles cannot be sufficiently reacted with fluorine, if higher than about 600°C, there is a tendency that thermal decomposition reactions occur rather than a production of the carbon fluoride particles. The reaction times vary with the reaction temperature. If the reaction time is too short, it is difficult to fluorinate the surface of the carbon particles sufficiently ad uniformly. If too long, the fluorination also occurs inside the carbon particles, whereby the particles are broken to an amorphous shape. The preferred reaction temperature varies with the kind and particle size of the carbon particles, a d is 400°C to 550°C, more preferably 400°C to 500°C. The reaction time is usually from one minute to six hours, preferably five minutes to three hours, more preferably ten minutes to two hours.

According to the process of the present invention, since the reaction is carried out within a relatively short time under the particular reaction conditions, the obtained carbon fluoride particles have a low F/C in the core portion and a high F/C at the surface (shell portion) of the carbon particles.

The fluorine gas is usually introduced after dilution with nitrogen, argon, helium, air or the like to 2 to 100 % by volume, preferably 2 to 50 % by volume, more preferably 5 to 20 % by volume. To the dilution gas, if necessary, are added oxygen, tetrafluorocarbon, hydrogen fluoride and the like. After the reaction, the fluorine gas is instantly purged with an inert gas, and then the carbon fluoride particles are cooled.

The starting carbon particles used in the process of the present invention have a degree of sphericity equal to that of the desired carbon fluoride particles. The degree of sphericity of the carbon particles is generally 0.5 to 1.0, preferably 0.8 to 1.0.

Examples of carbon particles to be fluorinated in the process of the present invention are, for instance, meso-carbon microbeads (MC) (carbon thermally treated at 2800°C available from OSAKA Gas Co., Ltd.; number-average particle size: 6 to 20 µm; content of particles having such a diameter that the particle size distribution falls within the number-average particle size +/-20 %: 50 %; degree of sphericity: 0.7 to 0.8; true specific gravity: 2.1 to 2.2), fine thermal (FT) (available from Asahi Carbon Co., Ltd.; number-average particle size: 0.09 µm; particle size distributions (particles falling within the number-average particle size +/-20 %): 70 %; degree of sphericity: 0.9 to 1.0; true specific gravity: 1.8 to 1.9), medium thermal (available from Columbia Carbon Co., Ltd.; number-average particle size: 0.35 µm; particle size distribution (particles falling within the number-average particle size +/-20 %): 60 %; degree of sphericity: 0.9 to 1.0; true specific gravity: 1.8 to 1.9), acetylene black (Denka Black available from Denki Kagaku Kogyo Co., Ltd.; number-average particle size: 0.04 µm; particle size distribution (particles falling within the number-average particle size +/-20 %): 70 %; degree of sphericity: 0.9 to 1.0; true specific gravity: 1.8 to 1.9), furnace black, and the like.

The carbon fluoride particles of the present invention are excellent in powder flowability. Therefore, not only when used alone but also when added to resins, rubbers, films, paints, oils, aqueous solutions, greases, other various inorganic materials, and other various metallic materials, the handling properties are good, and as mentioned hereinbefore, the dispersibility is also good.

Uses utilizing the water-repelling properties are, for instance, as an additive for films, for resins, for paints and for rubbers, and for plating dispersions. Specific examples are, for instance, an air electrode for air battery, a gas diffusion electrode for phosphoric acid fuel cells, an anode for closed-type secondary batteries having an anode of hydrogen-absorbing alloy, and the like.

Uses utilizing the non-tackifying (releasing) properties are, for instance, as an additive for films, for resins and for paints, and for rubbers, and specific examples are, for instance, a fixing roller for electrostatic copying machines, a resin molding die, and a releasing agent for plastic moldings, rubber moldings, die-cast articles, glass articles ad sintered alloys, and the like.

Uses utilizing the lubricating properties are, for instance, as an additive for lubricating oils and greases. Examples for the lubricating oils are, for instance, mineral oils such as naphthenic hydrocarbons, paraffinic hydrocarbons and aromatic hydrocarbons; synthetic oils such as olefinic polymerized oils, diester oils, polyalkylene glycol oils, halogenated hydrocarbon oils, silicone oils and phosphate oils; and fatty oils. Examples for greases are greases prepared by adding a metallic soap, bentonite, silica gel, copper phthalocyanine, allylurea and fluorine-containing resins to a base oil such as the above-mentioned mineral oils or synthetic oils. Specific examples are engine oils for cars, a wheel bearing grease, a graphite grease, a lubricant for drawing of metal, and the like.

The carbon fluoride particles have a surprising property, i.e. controllable electric conductivity. Carbon particles such as carbon black are electrically conductive, but fluorinated carbon becomes a insulator. Though the conductivity remains in a incompletely fluorinated carbon to some extent, since the carbon is fluorinated as a whole, the remaining conductivity is low and is not sufficient to provide an additive usable as a agent for imparting conductivity. The carbon fluoride particles of the present invention have, as mentioned above, a core-shell structure, and the shell portion is a very thin carbon fluoride layer. Therefore, it is assumed that the conductivity of carbon of the core portion is not significantly lowered.

Accordingly, the carbon fluoride particles of the present invention can further be used for applications utilizing the electric conductivity. Examples are, for instance, conductive paints, antistatic resin compositions, a antistatic containers for semiconductor chips, antistatic and abrasion resistive sheets, cleaning brades for brushing photosensitive drums of an electrostatic copying machine, fixing rollers in an electrostatic copying machine, toners or carriers for electrostatic copying machine, variable resistors, gas diffusion electrodes for phosphoric acid fuel cell, a air electrodes for air battery, surface treating agents for hydrogen-absorbing alloy in alkaline battery, and the like.

Though the carbon fluoride particles can be solely applied to various uses utilizing their excellent properties, by combining with other materials it is possible to endow the specific functions of the carbon fluoride particles of the present invention with the other materials.

Examples for composite materials are, for instance, composite materials in which the carbon fluoride particles are added and dispersed into solid materials such as resins, rubbers, metals, ceramics and carbons, or into liquid materials such as oils, organic solvents, water and various aqueous solutions. Resins which can be endowed with the specific functions of the carbon fluoride are used. Examples of such synthetic resins are phenol resin, urea resin, epoxy resin, fluorine-containing resin, acetal resin, polycarbonate, polyamide, polyimide, polyester, polyphenylene sulfide, silicone resin and the like. Examples for rubbers are styrene-butadiene rubber, chloroprene rubber, neoprene rubber, nitrile rubber, ethylene-propylene-butadiene rubber, and the like. Examples for metals are aluminum, titanium, nickel, lead, tin, copper, zinc, and the like. Also, alloys such as duralmin, stainless steel and hydrogen-absorbing alloys may also be employed. Examples for ceramics are SiC, Si₃N₄, BN, AlN, PbSnF₄, as well as oxides such as alumina, zirconia, yttria and titania, and the like. Examples for carbons are meso-carbon microbeads, needle coke, carbon black, pitch, tar, and the like. Examples for oils are mineral oils and synthetic oils such as polyolester oils as well as fluorine-containing oils such as perfluoropolyether and CTFE oligomer. However, oils which contain an amine additive are not preferable. Examples for organic solvents are alcohols such as ethanol, hydrocarbons such as benzene, halogenated hydrocarbons (hydrogen atom may be contained in the molecule), and the like. Examples for aqueous solutions are aqueous solutions containing a surfactant, more specifically a plating solution, and the like.

A composite with a solid material can be prepared, for example, by dispersing the carbon fluoride particles as a solid material in a proper organic solvent or aqueous solution, and as it is or after coating, drying the dispersion to remove the organic solvent or the like. If necessary, a post-treatment such as sintering may be carried out. Other methods for obtaining the solid material my be used by once preparing the fine composite particles as mentioned hereinafter, powder-coating or compression-molding the particles, and if necessary, applying post-treatments like sintering. According to this method, a thin film can be provided such as a film, a porous membrane or coating, and molded articles.

A composite with a liquid material can be prepared, for example, by dispersing the carbon fluoride particles in a liquid material with an ultrasonic dispersing machine. If necessary, an additive such as a surfactant may be added. The liquid composite may be in the form of paint, spraying solution, plating solution, lubricating oil, grease and the like.

Further, it is possible to prepare fine composite particles by coating solid particles with the carbon fluoride particles of the present invention. Examples for solid particles are, for instance, resin particles, rubber particles, metal particles, ceramic particles, carbon particles, and the like. Usable particle sizes are within the range of 0.1 to 500 µm, and the shape of the solid particles may not be spherical. A preferred method for coating with the carbon fluoride particles is, for example, a method in which an impact mixing method or mixing with agitation is conducted with an impact surface improving machine or a high speed agitation type mixer (dry type). The fine composite particles are suitably available for uses such as a water- and oil-repellent, a non-tackifying agent, a solid lubricant, an agent for imparting electric conductivity and the like, and more specifically, a powder paint for electrostatic coating, a powder for flame spraying, a powder for powder metallurgy, an additive for plating dispersions, an additive to toners for developing electrostatic images, an additive to resinous coatings of carriers for developing electrostatic images, a hydrogen-absorbing alloy electrode of alkaline batteries in which a hydrogen-absorbing alloy is used, a lubricant for draw-processing of metals, an additive to coating of a fixing rollers, and the like.

The carbon fluoride particles of the present invention are particularly useful as an additive to toners for developing electrostatic images. Hitherto, in order to prevent adhesion of the toners to the surface of the carriers and to the surface of the photoreceptor, carbon fluoride particles have been added to the toners. However, the adhesion-preventing effect in the prior methods is insufficient, because the carbon fluoride particles obtained by the prior methods are bad in powder flowability due to their irregular shape and wide particle distribution, and thus are not sufficiently dispersed in the toners. The carbon fluoride particles of the present invention are excellent in dispersibility and powder flowability, and are an additive to toners which has not been disclosed in the prior art.

Namely, the present invention also relates to an additive for toners used for developing electrostatic images comprising carbon fluoride particles with a number-average particle size of 0.01 to 10 µm, preferably 0.1 to 10µm, a content of particles having such a diameter hat the particle size distribution falls within the range of the number-average particle size +/-20 % amounting to at least 50 % of the whole, a true specific gravity of 1.7 to 2.5, a F/C of the particle as a whole from 0.001 to 0.3, and a F/C of the particle at the surface always larger than the F/C as a whole and from 0.1 to 2.0.

The carbon fluoride particles used in the additive for toners for developing electrostatic images of the present invention are the same as the carbon fluoride particles of the present invention except that the number-average particle size is 0.01 to 10 µm. If the number-average particle size of the carbon fluoride particles is larger than 10 µm, there is a tendency for the characteristics of the toner not being exhibited sufficiently, because the particle size is near the particle size of the toner.

Since the additive for toners for developing electrostatic images of the present invention has a uniform shape, a narrow particle size distribution and a small true specific gravity, the additive is excellent in powder flowability and dispersibility and thus is uniformly dispersed in the toner. As a result, the adhesion-preventing effect (adhesion of toner to the carrier surface) and the removability of the remaining toner on the photosensitive drum can be improved due to the surface of the additive to toner being fluorinated.

The additive for toners for developing electrostatic images of the present invention is used by adding it to the toner to which usual components are blended. Examples for the usual components which constitute the toner are, for instance, a binder resin, a coloring agent, and the like.

The additive to toner for developing electrostatic images is used in amount of 0.01 to 10 parts by weight to 100 parts by weight of the toner. If the amount is larger, the characteristics of the toner cannot be exhibited, and if it is smaller, the desired effects of the additive cannot be obtained. A preferred amount is 0.1 to 3 parts by weight.

Examples for the binder resins are, for instance, homo- or co-polymers of styrenes such as styrene, chlorostyrene and vinylstyrene; monoolefins such as ethylene, propylene, butylene and isobutylene; vinyl esters such as vinyl acetate, vinyl propionate, vinyl benzoate, vinyl butylate, vinyl propionate and vinyl benzoate; esters of α-methylene aliphatic monocarboxylic acids such as methyl acrylate, ethyl acrylate, butyl acrylate, dodecyl acrylate, octyl acrylate, phenyl acrylate, methyl methacrylate, ethylmethacrylate and butyl methacrylate; vinyl ethers such as vinyl methyl ether, vinyl ethyl ether and vinyl butyl ether; vinyl ketones such as vinyl methyl ketone, vinyl hexyl ketone and vinyl isopropenyl ketone and the like, more specifically, polystyrene, styrene-alkyl acrylate copolymer, styrene-maleic anydride copolymer, polyethylene, polypropylene, and the like. As binder resins, may be used: polyesters, polyurethanes, epoxy resins, silicone resins, polyamides, modified resins, paraffins and the like. Examples for the coloring agents are, for insance, carbon black, Nigrosine dye, Aniline Blue, Karcoil Blue, Chrome Yellow, Ultramarine Blue, Dupont Oil Red, Quinoline Yellow, Methylene Blue Chloride, Phthalocyanine Blue, Marakite Green Oxalate, Camp Black, Rose Bengal, and the like. The additive to toner for developing electrostatic images of the present invention can also be used by adding it to magnetic toners containing magnetic materials. The additive to toners for developing electrostatic images can exhibit its effects with respect to both negatively charged toner ad positively charged toners. In addition, the additive to toners for developing electrostatic images has an effect as a charge-controlling agent.

The carbon fluoride particles of the present invention are particularly useful as an additive to resinous coatings of carriers for developing electrostatic images. Conventionally, in order to improve the abrasion resistance of the carrier and the toner spent, carbon fluoride particles have been added to the resinous coating of the carrier for developing electrostatic image. However, since the prior known carbon fluoride particles have an irregular shape, their powder flowability is bad and their adhesion to the carrier is insufficient. Thus, the particles tend to be broken due to friction or the like. In addition, since the particle size distribution is wide, the difference of the F/C is large among the individual particles, and, as a result, the toner charge varies widely. Further, carbon fluoride particles having a large particle size tend to be peeled off from the carrier. The carbon fluoride particles of the present invention, however, have a uniform particle size and are excellent in powder flowability, and further have a narrow particle size distribution, which can provide a novel excellent additive to coating of carrier.

Accordingly, the present invention also relates to an additive for resinous coatings of carriers for developing electrostatic images comprising the carbon fluoride particles, with a number-average particle size of 0.01 to 50 µm, preferably 0.1 to 50 µm, a content of particles having such a diameter that the particle size distribution falling within the range of the number-average particle size +/-20 % amounting to at least 50 % of the whole, a true specific gravity of 1.7 to 2.5, a F/C of the particles as a whole of 0.001 to 0.3, and a F/C of the particles at the surface always larger than the F/C as a whole and from 0.1 to 2.0.

Since the additive (particles) to coatings for the carriers has a near spherical shape, a uniform particle size ad a narrow particle size distribution, the additive adheres well to the carrier core and has a lower tendency of being peeled off when abraded. The additive can be produced at relatively low costs because of the low fluorine content. Therefore, it is possible to improve the abrasion resistance of the carrier and the toner spent at low costs.

The carrier for developing electrostatic images comprises a carrier core on which a coating made of resin is provided. The coating contains the additive of the present invention.

The carbon fluoride particles of the additive for coatings of the carriers of the present invention are the same as the carbon fluoride particles of the present invention.

The carrier core has a particle size of about 30 to 500 µm. Usually the total amount of the resin and the carbon fluoride particles is 0.1 to 10 parts by weight to 100 parts by weight of the carrier core.

As methods for coating the carrier core with the resin containing the carbon fluoride particles, the wet method ad the dry method may be used. When using the wet method, a coating solution is applied. When using the dry method, the carrier core particles, the carbon fluoride particles and the resin particles are admixed with agitation or are subjected to impact-mixing.

Since the carbon fluoride particles have water-repelling properties, the latter dry method is preferred. Examples for machines used with the dry method are impact type surface improving machines such as Hybridizer (available from Nara Kikai Seisakusho) and Mechanomill (available from Okada Seiko), high speed agitation type mixers such as Laboratory Matrix (available from Nara Kikai Seisakusho), Vertical Granulator (available from Fuji Sangyo) and Spiral Flow Coater (available from Froint).

According to the carbon fluoride particles of the present invention, a charge characteristics of the particles can be controlled to some extent by controlling the degree of the F/C at the surface. For example, if the F/C at the surface is larger the particles show a strong negative charge and the carrier for developing electrostatic image is usually a negatively chargeable carrier which endows the toner with positive charge. The charge characteristics also depend on the charge characteristics of the resin, and therefore a positive chargeable carrier can be obtained depending on the F/C at the surface of the carbon fluoride particles contained in the resin and on the content of the particles. Examples for the resins are fluorine-containing resins and silicone resins for the negative chargeable carrier, and the styrene-acrylate resin for the positive chargeable carrier.

The carbon fluoride particles of the present invention have a similar certain electric conductivity. It is known that toners having a conductivity to some extent are generally excellent in respect to reproducibility of images or the like.

The content of the carbon fluoride particles in the resinous coatings is in the range from 0.5 to 65 % by weight. If the content of the carbon fluoride particles is lower, the obtained resinous coating is inferior with respect to abrasion resistance, and if it is higher the dispersibility of the carbon fluoride particles is worse and the carbon fluoride particles tend to be easily peeled off from the carrier surface. A preferred content is 5 to 40 % by weight.

Carrier core materials used in the present invention may be sands, glasses, metals, ad the like. Preferred materials are substances which are strongly magnetized by a magnetic field in the direction of the magnetic field such as ferrites, magnetites, ferromagnetic metals such as iron, cobalt, nickel, or alloys and compounds thereof; alloys which as such do not show such a ferromagnetic property but show a ferromagnetic property when heat-treated appropriately such as manganese-copper-aluminium and manganese-copper-tin; chromium dioxide; and the like.

Preferred examples for the resin materials are, for insance, fluorine-containing resins such as polyvinylidene fluoride, polytetrafluoroethylene, polychlorotrifluoroethylene, polytrifluoroethylene, vinylidene fluoride-tetrafluoroethylene copolymer, tetrafluoroethylene-hexafluoropropylene copolymer, tetrafluoroethylene-perfluoro(vinylether) copolymer, tetrafluoroethylene-ethylene copolymer, vinylidene fluoride-tetrarluoroethylene-chlorotrifluoroethylene copolymer, vinylidene fluoride-tetrafluoroethylene hexafluoropropylene copolymer and vinylidene fluoride-chlorotrifluoroethylene copolymer; fluorinated (meth) acrylate resins represented by the formulae: 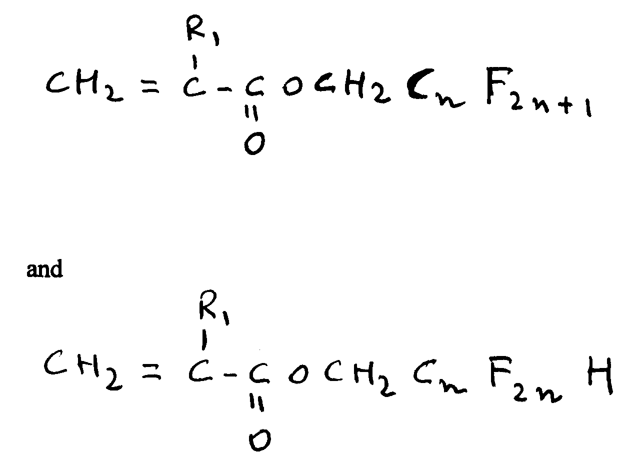 styrene resins; styrene-alkyl (meth) acrylic resins; (meth)acrylic resins; epoxy resins; polyethylene resins; polypropylene resins; polybutadiene resins; polyurethane resins; polyester resins; polyamide resins; polycarbonate resins; silicone resins; and the like.

The present invention further relates to a fixing roller of a heat roller fixing machine for an electrostatic copying machine, which is coated with a composite material in the form of film or paint to which the carbon fluoride particles of the present invention are added.

In electrostatic copy machines a recent popular method used for fixing toner images formed on paper is with a heat roller. This method is carried out by passing a paper on which a toner image is formed through two tightly contacted rollers, one or both of which are being heated from the inside. Thereby the toner image is fused on the paper.

This fixing method has various advantages such as a high speed operation and a high heat efficiency in comparison with other methods like the oven type. Accordingly, in almost all of the recent electrostatic copying machines, such a fixing method with these rollers is employed. Generally a fixing roller is produced by coating a surface of the roller (made of a metal such as aluminum or stainless steel) with a non-adhesive substance such as a fluorine-containing resin in order to prevent offset.

In case of using such a fixing roller, if an image of toner powder, which is positive charged, is fixed by contact with a roller coated with a fluorine-containing resin, the positive charged toner is electrically absorbed to cause the electrostatic offset and thus the part of the image is not fixed because of the fluorine-containing resin being negatively charged due to its lower abrasion charging property.

In order to avoid this phenomenon, a fixing roller coated with a fluorine-containing resin in which electrically conductive materials are dispersed (JP-A-55374/1980) has been proposed. However, this conductive material (mainly carbon) is not good with respect to releasing properties. Therefore, if the conductive material appears on the surface of the fluorine-containing resin coating of the roller, the toner adheres to the appeared portion to cause the hot offset; which results not only in staining of the fixed image but also in shortening of the usable duration of the fixing machine. Therefore early change of the fixing roller is required.

In order to prevent the occurrence of both electrostatic offset and hot offset, a fixing roller is proposed, which is prepared by first surface-treating the conductive materials with a substance having a low surface energy, dispersing the surface-treated conductive materials into the fluorine-containing resin, and then coating the roller surface with the fluorine-containing resin (JP-A-17080/1989). If a usual wet surface-treating agent is used, both the electrostatic offset and the hot offset can be prevented temporarily; a sufficient preventing effect can, however, not be obtained for a long time at a high temperature of about 200°C .

Some fixing rollers surfaces coated with a fluorine-containing resin in which a carbon fluoride is dispersed have been proposed. For example, in JP-B-44224/1988, a fixing roller coated with a fluorine-containing resin containing a carbon fluoride in a content of 1 to 25 % by weight has been proposed. However, the prevention of hot offset and the abrasion resistance may be improved, but the occurrence of electrostatic offset cannot be prevented, because the carbon fluoride is electrically insulative. In JP-A-224366/1983, the use of a carbon fluoride in which an unreacted portion is remaining is disclosed. Actually, however, the releasing property (prevention of hot offset) and the improvement of abrasion resistance are insufficient, and the roller is decidedly inferior to such with carbon fluoride in which no unreacted portion is remained. Further, nothing is said about preventing the effect of electrostatic offset by a conductive material.

In JP-B-59468/1990, on the other had, it has been proposed that a carbon fiber is added as a conductive material and that a carbon fluoride is added for improving the abrasion resistance. However, according to this proposal, not only the preparation step is complicated due to the use of two additives, but it is also difficult to disperse uniformly and to coat uniformly.

Actually, as described in that specification, the abrasion resistance is somewhat improved by that carbon fluoride, but the electrostatic offset is not prevented.

The fixing roller of the present invention can effectively prevent both offsets, i.e. electrostatic offset and hot offset, ad can maintain such an effect for a long time; and ether it is excellent in abrasion resistance and heat conductivity.

The carbon fluoride particles used in the present invention as an electric conductive material and as a releasing material have a number-average particle size of 0.01 to 50 µm, a content of particles having such a diameter that the particle size distribution falls within the range of the number-average particle size +/-20 % amounting to at least 50 % of the whole, a F/C ratio as a whole of 0.001 to 0.5, and a F/C ratio at the surface always larger than the F/C ratio as a whole and from 0.5 to 2.0.

The carbon fluoride particles have a so-called core-shell structure, and comprise a core portion of carbon, which is substantially electrically conductive, and a shell portion with a large amount of carbon fluoride, which is low in electric conductivity but has a very low surface energy, i.e. a high hot offset preventing effect. In the particles the F/C of the shell portion is always larger than that of the core portion.

The carbon fluoride particles of the present invention have a F/C as a whole of 0.001 to 0.5. If this F/C is lower, the amount of the carbon fluoride is not high enough to obtain the hot offset preventing effect, and if higher, the electric conductivity is too low to obtain the electrostatic offset preventing effect. Preferred F/C-values are 0.001 to 0.3.

The composite material for the fixing roller of the present invention is prepared by dispersing the carbon fluoride particles in the matrix resin or matrix rubbers and is formed as film or paint.

Preferred examples for the matrix resins are, for instance, polyolefin resins such as polyethylene and polypropylene, and fluorine-containing resins. Examples for the fluorine-containing resins used in the present invention are polytetrafluoroethylene; copolymers of tetrafluoroethylene with at least one of other copolymerizable ethylenically unsaturated monomer (for example, olefins such as ethylene and propylene, halogenated olefins such as hexafluoropropylene, vinylidene fluoride, chlorotrifluoroethylene and vinyl fluoride, perfluoroalkyl vinyl ethers); polychloro-trifluoroethylene; polyvinylidene fluoride; and the like. Particularly preferable fluorine-containing resins are polytetrafluoroethylene, copolymers of tetrafluoroethylene with at least one of hexafluoropropylene, perfluoro(methyl vinyl ether), perfluoro(ethyl vinyl ether) and perfluoro(propyl vinyl ether) (containing generally in an amount of not more than 40 % by mole with respect to tetrafluoroethylene), and the like.

As the rubbers, silicone rubbers or fluorine-containing rubbers are preferred. The fluoro-containing rubbers used in the present invention are highly fluorinated elastic copolymers, and particularly preferable are elastic copolymers of generally 40 to 85 % by mole of vinylidene fluoride with at least one another copolymerisable fluorine-containing ethylenically unsaturated monomer. A fluorine-containing rubber which contains iodine in polymer chain is, for instance, a fluorine-containing rubber which mainly comprises an elastic copolymer of, as mentioned above, 40 to 80 % by mole of vinylidene fluoride with at least one another copolymerizable fluorine-containing ethylenically unsaturated monomer, said copolymer containing 0.001 to 10 % by weight, preferably 0.01 to 5 % by weight of iodine at its polymer end (JP-A-40543/1977). Typical examples of the other ethylenically unsaturated monomers which are copolymerized with vinylidene fluoride to provide the elastic copolymers are hexafluoropropylene, pentafluoropropylene, trifluoroethylene, trifluorochloroethylene, tetrafluoroethylene, vinyl fluoride, perfluoro(methyl vinyl ether), perfluoro(ethyl vinyl ether), perfluoro(propyl vinyl ether), and the like. Particularly preferable fluorine-containing rubbers are vinylidene fluoride/hexafluoropropylene elastic copolymer and vinylidene fluoride/tetrafluoroethylene/ hexafluoropropylene elastic copolymer.

The amount of carbon fluoride particles is, in case of a film, 0.1 to 50 % by weight, preferably 1 to 20 % by weight, and in case of a paint, 0.1 to 50 % by weight in the dry coating, preferably 1 to 20 % by weight. As a production process of the fixing roller, a usual process is employed.

As mentioned above, both the electrostatic offset and the hot offset can be effectively prevented and such an effect can be maintained for a long time because the fixing roller of the present invention is provided on its surface with a coating containing the novel carbon fluoride particles having both electric conductivity and low surface energy. Further the coating is excellent in abrasion resistance. In addition, since a large amount of the carbon fluoride particles can be incorporated to the fluorine-containing resin, the heat conductivity can be improved, whereby the thickness of the coating can be increased. Owing to the above-mentioned synergistic effects, fixing rollers having an epoch-making long life can be provided.

The present invention further relates to a gas diffusion electrode comprising an electrode with a surface on which a layer of a composite material containing the carbon fluoride particles of the present invention, a fluoro resin and a catalyst is provided.

The gas diffusion electrode of the present invention is useful in batteries as an electrode for an alkaline, sulfuric acid or phosphoric acid fuel cell and as an air electrode for an air battery such as zinc/air battery; and in the industrial electrolytic field, as a hydrogen generating electrode in salt electrolysis, a electrode for depolarization by oxygen, a chloride generating electrode, an anode for water electrolysis or electroplating, and the like. The gas diffusion electrode is a electrode which reacts at the interfaces of three gas/liquid/solid layers, i.e. the gas layer which relates to the reaction on a electrode, the solid layer and the electrolyte layer which has a role as an electrode catalyst to accelerate the electron transferring and the reaction on the electrode. Accordingly, in order to improve the performance of the gas diffusion electrode, it is necessary to increase the interface of the three layers by controlling the gas permeable water-repelling area and the hydrophilic area where the electrolyte can exist. In the prior art fluorine-containing resins such as typically polytetrafluoroethylene, and water-repelling carbon black such as typically acetylene black are used as materials for the water-repelling area. The acetylene black used in the water-repelling area does not have sufficient water-repelling properties, oxidation resistance and corrosion resistance with regard to the electrolyte. Thus, when used for a long time, the electrolyte penetrates into the water-repelling area where the gas should pass through, and the gas cannot be supplied sufficiently, resulting in a stop of the electric current.

It has been tried to improve the water-repelling properties, oxidation resistance and corrosion resistance by subjecting the acetylene black to various surface-treatments. For example, JP-A-2 07893/1987 proposes to improve the water-repelling properties, oxidation resistance and corrosion resistance by heat-treating the acetylene black together with a carbon material under an inert atmosphere to convert it into graphite. This method, however, is problematic in that a temperature above 1000° to 2000°C is required ad in that the corrosion resistance may be reduced because the growth of the graphite crystal accelerates the formation of an interfacial compound with the phosphoric acid in the electrolyte. With this knowledge, it has been tried to use a carbon fluoride as the water-repelling substance, which is extremely excellent with respect to water-repelling properties, oxidation resistance and corrosion resistance (JP-A-118857/1992). The carbon fluoride used in that method is a completely fluorinated one and is electrically insulative. Therefore, though long lifetime can be achieved because of its excellent water-repelling properties, oxidation resistance and corrosion resistance, problems arise from the internal resistance of the electrode becoming high due to its electric insulation, and thus the battery performance decreases and heat is generated.

In JP-B-31788/1987, an electrically conductive water-repelling partially fluorinated graphite having a low fluorine content, which can exhibit simultaneously both the water-repelling properties and the electric conductivity has been proposed.

As described in the publication, however, if the value x of CFx (x corresponding to the fluorination degree as a whole of the present invention) is lower than 0.2, the electric resistance becomes lower than 1000 Ω . cm⁻¹, and at the same time the contact angle to water which represents the water-repelling property is at most 120 degrees. This value of contact angle is excellent in comparison with that of polytetrafluoroethylene (about 110 degrees), but is remarkably inferior to the inherent value of carbon fluoride (about 140 degrees). Further, though the carbon fluoride prepared by a known preparation process, for example a process described in the above-mentioned publication, has the desired degree of fluorination as a mean value of the whole reaction product the carbon fluoride is only a mixture at a microscopic level. Namely, a small particle will have a relatively high fluorination degree and a large particle a relatively low fluorination degree. When manufacturing a gas diffusion electrode by using such carbon fluoride particles having irregular fluorination degrees, the electrolyte penetrates into areas where the water-repelling property is insufficient, and as a result, stability of the interface of the three layers, i.e. gas/liquid/solid decreases, and thus the performance of the electrode decreases fast.

The carbon fluoride particles of the present invention can provide an epoch-making conductive water-repellent which can solve all of the above-mentioned problems. Namely, the carbon fluoride particles of the present invention are characterized in that, as mentioned above, the fluorination degree at the surface is large even if the fluorination degree as a whole is not more than 0.2, whereby excellent water-repelling properties equal to those of completely fluorinated carbon fluoride can be obtained. Accordingly, since sufficient water-repelling properties can be obtained at a low fluorination degree as a whole, i.e. with the electrical resistance being low, the internal resistance of the gas diffusion electrode can be lowered. Further, since the initial water-repelling properties are high, it takes a long time for the electrolyte to penetrate even if the electrode is degraded with lapse of time. By this a long life electrode can be provided.

In addition, since the particle size distribution is narrow and the fluorination degree is uniform, a spot at which the electrolyte may easily penetrate is unlikely to occur in the electrode, and thus the stable interfaces of the three gas/liquid/solid layers can be maintained for a long time. Accordingly, a battery having a small overpotential and a long life can be obtained.

The gas diffusion electrode is particularly useful as a fuel electrode and as an oxygen electrode for phosphoric acid fuel cells. Typical structures of phosphoric acid fuel cells are illustrated in Fig. 1. In Fig.1, (1) represents a matrix which acts to maintain a phosphoric acid electrolyte and which is made of, for example, a composite material of a fluorine-containing resin and SiC. (2) represents a pipe through which a heated medium passes ad is made of a stainless steel which is protected against corrosion by a fluorine-containing resin. (3) represents a collecting plate from which an electric current is taken. (4) and (5) represent a fuel electrode and an oxygen electrode, respectively, in which a gas diffusion electrode prepared by using the carbon fluoride particles of the present invention is employed.

More specifically, the fuel cell has a two-layer-structure consisting of the electrode catalyst layer, which provides the electrode reaction field by forming the three-layer-interface, and the gas diffusion layer, which smoothly feeds hydrogen or a fuel gas to the electrode catalyst layer.

The electrode catalyst layer is prepared by using a composite material which comprises at least the carbon fluoride particles of the present invention, a fluorine-containing resin as a binder, carbon black as a catalyst carrier and platinum as a catalyst. When preparing the composite material an electrode catalyst having a higher performance may be obtained by means of an impact surface improving machine or a high speed agitating mixer (dry type).

The gas diffusion layer is prepared by using a carbon paper, which is subjected to a water-repelling treatment. As a water-repelling treatment, a fluorine-treatment is particularly preferable, and before the fluorine-treatment, if necessary, a proper oxidation treatment or a steam modification can be carried out.

The gas diffusion electrode of the also present invention is also useful as a air electrode for air batteries. In particular a zinc/air battery may be used. These batteries are widely used in hearing-aids and beepers, because they are cheap ad have a high energy density and a small content of substances. The zinc/air battery comprises a anode made of zinc, as a cathode a gas diffusion electrode, which utilizes oxygen from the air as a cathode active material, and as electrolyte a concentrated alkaline aqueous solution. Further, in order to prepare a closed-type battery, a water-repelling membrane is used for preventing the electrolyte from leaking to the outside of the battery and for supplying oxygen from the air smoothly into the battery. Practically, a porous membrane of PTFE is used, and various oxygen permeable membranes have been studied. Some of the oxygen permeable membranes exhibit good oxygen permeability but inferior water-proofness. For improving the water-proofness, it is useful to employ oxygen permeable membranes to which the carbon fluoride particles are added.

One problem of the zinc/air battery is that their characteristics under a high load is bad. Namely, if a high current is wished, it is required for the gas diffusion electrode to be excellent in gas permeability, since air having a low oxygen content is used. The gas diffusion electrode of the present invention has a excellent gas permeability, and is particularly useful as the air electrode of the zinc/air battery.

As a gas diffusion electrode for the zinc/air battery, the same electrode as for the phosphoric acid fuel cell may be used as it is, and for utilizing effectively the oxygen in the air at room temperature, the catalysts may be modified. For example, for a gas diffusion electrode comprising a composite material prepared from the carbon fluoride particles of the present invention, a catalyst of manganic acids, an active carbon and a binder such as PTFE is suitable.

The present invention further relates to an alkaline battery comprising an anode of a hydrogen-absorbing alloy which is surface-treated with the carbon fluoride particles.

Alkaline batteries having an anode of a hydrogen-absorbing alloy have a higher energy density than prior nickel/cadmium-type alkaline batteries and are widely used as a power source for portable video recorders or personal computers. Since the alkaline batteries with a hydrogen-absorbing alloy have a high energy density, it is possible to discharge them for a longer time per charge than the prior nickel/cadmium-type batteries. However, there is a problem that rapid charging properties and the lifetime of charge-discharge cycles are not equal to those of the known nickel/cadmium batteries.

Considering these problems, optimization of the composition of the hydrogen-absorbing alloy has been carried out, and so various surface treatments have been tried. For example, JP-A-139255/1987 proposes a surface-treatment with a dispersion of a fluorine-containing resin. According to such a treatment, the interfaces of the three gas/liquid/solid layers are formed by endowing the surface of the hydrogen-absorbing alloy electrode with water-repelling properties, at which portion the oxygen generated by the rapid charging can be electrochemically reduced.

Thereby, the rapid charging performance can be improved and the increase of the inner pressure of the battery at overcharge can be inhibited. However, if the dispersion of the fluorine-containing resin is exposed to atomic hydrogen or oxygen in the concentrated alkaline electrolyte, the water-repelling properties cannot be maintained stable for a long time. Since the fluorine-containing resin is not electrically conductive, the internal resistance of the electrode becomes large, which results in decreasing battery performance.

By using the carbon fluoride particles of the present invention, all of the above problems can be solved at once. Namely, since the carbon fluoride particles of the present invention have better water-repelling properties than usual fluorine-containing resins and an excellent chemical stability, the same effects as of the usual fluorine-containing resins can be obtained with smaller amounts, and the effects can be maintained for a long time. Further, since also the conductivity is excellent, the internal resistance of the battery does not increase. Thereby a battery having a small overpotential can be provided.

Since the carbon fluoride particles used in the present invention have a uniform particle size, it is not necessary to change the fluorination condition stepwise, and thus the reaction can be carried out for a short time at a relatively high temperatures to produce the carbon fluoride. As a result, the center portion of the carbon particle is less fluorinated, and only the surface of the carbon particle is highly fluorinated. Because the center portion is less fluorinated, as explained above, a breakage of the particle does not occur. Accordingly, the carbon fluoride particles of the present invention maintains the narrow particle size distribution and the spherical shape of the starting carbon particles. In addition, fluorine for the fluorination can be saved.

The carbon fluoride particles of the present invention have a low true specific gravity and do not exhibit the inherent properties of the prior carbon fluoride particles such as water-repelling properties, oil-repelling properties, non-adhesive properties and lubricating properties.

The present invention is explained by means of Examples, but the present invention is not limited to the Examples.

In the Examples, the true specific gravity is measured by a pyconometer method with ethanol. The other factors, i.e. number-average particle size, particle size distribution and degree of sphericity are measured by the methods explained in the above detailed description.

Dispersibility is measured by adding 1 ml of a nonionic surfactant (Triton X available from Rohm & Haas Company) to 100 ml of distilled water, and adding thereto 10 g of carbon fluoride particles, agitating for 10 minutes at 13,000 r.p.m. with a homogenizer (Nippon Seiki Kabushiki Kaisha), pouring the resulting dispersion into a test tube, allowing to stand for 6 hours, and then observing visually. Dispersions which remain dispersed are represented by 0, and those which are clearly separated into two layers, i.e. in a supernatant layer and a precipatated layer are represented by X.

### EXAMPLE 1

10 g of Mesocarbon micro-ads (MC) heat-treated at 2800°C (MCMB-6-28 available from Osaka Gas Co., Ltd.; number-average particle size: 6 µm; particle size distribution: particles having a particle size of from 4.8 µm to 7.2 µm amounting to 70 % of the whole; degree of sphericity: 0.8; true specific gravity: 2.1) was applied as a thin layer on a nickel plate and put into a Monel reactor (capacity: 1.5 ℓ ). After substitution of air in the reactor with nitrogen, while flowing nitrogen at a flow rate of 1 ℓ /minute, the temperature was raised up to the fluorinating temperature of 400°C and maintained for 1 hour. Then, fluorine gas diluted to 10 % by volume with nitrogen was supplied at a flow rate of 1 ℓ /minute and carbon particles were fluorinated for 0.5 hour. After the end of fluorination, the carbon fluoride particles were immediately cooled to room temperature while flowing nitrogen at a flow rate of 1 ℓ /minute, and then the carbon fluoride particles were taken out.

The F/C of the particle as a whole and the F/C of the particle at the surface of the obtained carbon fluoride particles were respectively 0.01 and 0.57. The number-average particle size was 6 µm, and the particle size distribution was such that particles having a particle size of 4.8 µm to 7.2 µm occupied 70 % of the whole, and a degree of sphericity was 0.8. The true specific gravity was 2.1, and dispersibility was good.

### EXAMPLES 2 TO 6

By using the same carbon particles as in EXAMPLE 1, fluorination was carried out in the same manner as in EXAMPLE 1 under the conditions shown in Table 1. The F/C as a whole and the F/C at the surface of the obtained carbon fluoride particles measured in the same manner as in EXAMPLE 1 are shown in Table 1, respectively, as well as the number-average particle size, the particle size distribution, the degree of sphericity, the true specific gravity and the dispersibility.

### EXAMPLE 7

100 g of Medium thermal (MT) of a thermal black (Sevacarb MT-CI available from Columbian Carbon Japan Ltd.; number-average particle size: 0.35 µm; particle size distribution: 60 % of particles having a particle size of from 0.28 µm to 0.42 µm; degree of sphericity: 1.0; true specific gravity: 1.8) was fluorinated in the same manner as in EXAMPLE 1 under the condition shown in Table 1. The F/C as a whole and the F/C at the surface of the obtained carbon fluoride particles measured in the same manner as in EXAMPLE 1 are shown in Table 1, respectively, as well as the number-average particle size, the particle size distribution, degree of sphericity, true specific gravity and dispersibility.

### EXAMPLE 8

The fluorination was carried out in the same manner as in EXAMPLE 7 except that reaction time was 1.0 hour. The F/C as a whole and the F/C at the surface of the obtained carbon fluoride particles measured in the same manner as in EXAMPLE 1 are shown in Table 1, respectively, as well as the number-average particle size, particle size distribution, degree of sphericity, true specific gravity and dispersibility.

### COMPARATIVE EXAMPLE 1

By using the same carbon particles as in EXAMPLE 1, the fluorination was carried out in the same manner as in EXAMPLE 1 under the condition shown in Table 1. The F/C as a whole and the F/C at the surface of the obtained carbon fluoride particles measured in the same manner as in EXAMPLE 1 are shown in Table 1, respectively, as well as the number-average particle size, particle size distribution, degree of sphericity, true specific gravity and dispersibility.

### COMPARATIVE EXAMPLE 2

10 grams of the same carbon particles as in EXAMPLE 7 was thinly spreaded on a nickel plate, and put into a Monel reactor. After substitution with nitrogen gas, the temperature was raised from room temperature to 400°C at a rate of 2.5 °C /minute while supplying a fluorine gas diluted to 10 % by volume with nitrogen, maintained for 30 hours, and then the fluorination was carried out. After the end of the fluorination, the carbon fluoride particles were taken out in the same manner as in EXAMPLE 1. The F/C as a whole and the F/C at the surface of the obtained carbon fluoride particles measured in the same manner as in EXAMPLE 1 are shown in Table 1, respectively, as well as the number-average particle size, particle size distribution, degree of sphericity, true specific gravity and dispersibility.

### COMPARATIVE EXAMPLE 3

The fluorination was carried out in the same manner as in COMPARATIVE EXAMPLE 2 except that the temperature-raising rate was 2.5 °C /minute and the retention time was 4 hours, The F/C as a whole and the F/C at the surface of the obtained carbon fluoride particles measured in the same manner as in EXAMPLE 1 are shown in Table 1, respectively, as well as the number-average particle size, particle size distribution, degree of sphericity, true specific gravity and dispersibility .

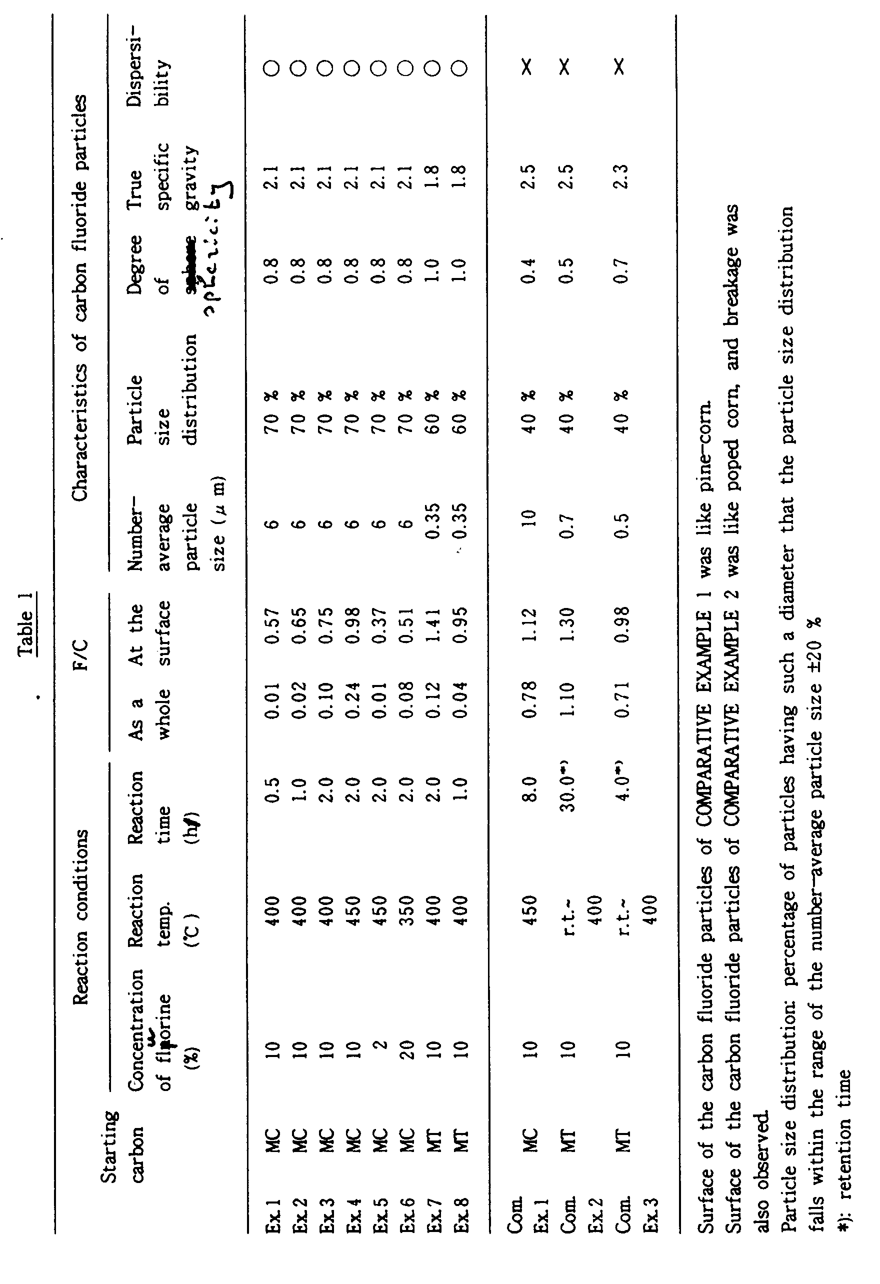

### EXAMPLE 9

100 parts by weight of a polystyrene resin [Vicorastic D 135 (registered trademark) available from Shell Standard Oil Co., Ltd.], 5 parts by weight of Viales 155 [trade name; available from Columbia Ribbon & Manufacturing Co., Ltd.], 5 parts by weight of Oilblack BW [registered trademark, available from Orient Kagaku Kogyo Kabushiki Kaisha] and 1 part by weight of the carbon fluoride particles obtained in EXAMPLE 7 were admixed by means of a ball mill, and kneaded, pulverized, then classified to obtain a toner having an average particle size of 9 µm. 100 parts by weight of the toner particles were mixed with 1 part by weight of the carbon fluoride particles obtained in EXAMPLE 7 to give a toner of the present invention.

2.5 Parts by weight of the toner were mixed with 100 parts by weight of a carrier wherein a surface of a spherical ferrite core was coated with a fluorinated methacrylate resin represented by the formula: 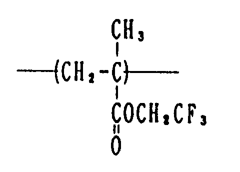 to give a developing agent for electrostatic copying.

Continuous copying test was conducted with 50,000 sheets of paper by using an electrostatic copying machine with which an organic photo-conductive photoreceptor was equipped. The photosensitive body had a negatively chargable two-layer structure consisting of an anthrone pigment as an electron generating substance of the photosensitive body and a curbazole derivative as an electron transporting substance. As the degree of adhesion of the toner to the surface of the photo-conductive body was examined, the toner was scarcely adhered on the surface, and after copying 50,000 sheets there could not be observed on the photocopy any band-like black stripe and any after- image due to the toner remaining on the photosensitive body in the form of image. In addition, after copying 50,000 sheets, when the state of adhesion of the toner to the surface of the carrier was examined by means of a scanning electron microscope, the toner was scarcely adhered. The charged amount measured according to the blow-off method decreased by about 2 % from the initial charged amount.

### EXAMPLE 10

A developing agent for electrostatic copying was prepared in the same manner as in EXAMPLE 9 except that the carbon fluoride particles obtained in EXAMPLE 8 were used, and the continuous copying test was carried out. As a result, there was no problem as in EXAMPLE 9.

### EXAMPLE 11

A developing agent for electrostatic copying was prepared in the same manner as in EXAMPLE 9 except that the carbon fluoride particles obtained in COMPARATIVE EXAMPLE 2 were used, and the continuous copying test was carried out. When the surface of the photo-conductive body after copying 50,000 sheets was examined, there was observed that a considerable amount of the toner was adhered, and on the photocopy, there were many stains such as band-like black stripes.

In addition, after copying 5,000 sheets examination of the state of adhesion of the toner to the surface of the carriers by means of a scanning electron microscope showed that the toner was adhered in a large amount. The charged amount measured according to the blow-off method decreased by about 20 % from the initial charged amount.

### EXAMPLE 12

30 parts by weight of the carbon fluoride particles obtained in EXAMPLE 3, 70 parts by weight of a polymer (A) represented by the formula: 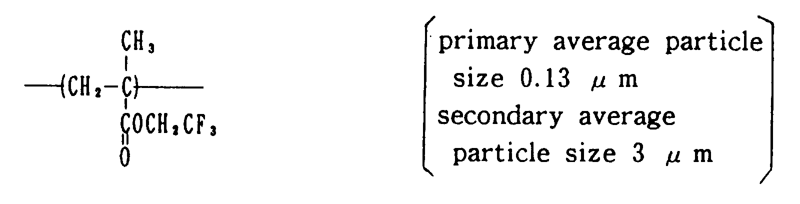 as a resin material and 4,000 parts by weight of a spherical carrier core of ferrite [F-150 available from Powder Tec Co., Ltd., average particle size 80 µm] were admixed and agitated at a temperature of 80°C by means of a high speed agitating mixer to obtain a carrier wherein the surface of the core was treated by coating.

### EXAMPLE 13

A carrier was prepared in the same manner as in EXAMPLE 12 except that 30 parts by weight of the carbon fluoride particles obtained in EXAMPLE 5 were used.

### EXAMPLE 14

A carrier was prepared in the same manner as in EXAMPLE 11 except that as a coating resin material, 70 parts by weight of a vinylidene fluoride-tetrafluoroethylene copolymer [(copolymerization ratio 80 : 20 mol %), primary average particle size 0.15 µm, secondary average particle size 4 µm] were used.

### EXAMPLE 15

A carrier was prepared in the same manner as in EXAMPLE 12 except that 30 parts by weight of the carbon fluoride particles obtained in EXAMPLE 6 and, as a coating resin material, a methyl methacrylate-styrene copolymer [ (copolymerization ratio 70 : 30 % by weight), primary average particle size : 0.10 µm, secondary average particle size : 3 µm] were used.

### EXAMPLE 16

1.5 parts by weight of the carbon fluoride particles obtained in EXAMPLE 3 and 3.5 parts by weight of the same resin material (A) as in EXAMPLE 12 were admixed with 100 parts by weight of methyl ethyl ketone.

The same carrier core as in EXAMPLE 12 was coated with the coating material by means of a fluidizing bed machine to obtain a carrier.

### COMPARATIVE EXAMPLE 4

A carrier was prepared in the same manner as is EXAMPLE 12 except that 30 parts by weight of the carbon fluoride particles obtained in COMPARATIVE EXAMPLE 1 were used.

### EXAMPLE 17

100 parts by weight of the carrier obtained in EXAMPLE 12 were admixed with 2.5 parts by weight of a toner having an average particle size of 8 µm which comprises a mixture of 100 parts by weight of a polystyrene resin [Vicorastic D 135, available from Shell Standard Oil Co., Ltd.] 5 parts by weight of Viales 155 [available from Columbia Ribbon & Manufacturing Co., Ltd.] and 5 parts by weight of Oil Black BW [available from Orient Kagaku Kogyo Kabushiki Kaisha] to obtain a developing agent for electrostatic copying machine.

Subsequently, a running test was conducted with 50,000 sheets of paper by using an electrostatic copying machine with which an organic photo-conductive photoreceptor was equipped. The photoreceptor had a negatively chargable two-layer structure consisting of an anthoalone pigment as an electrodeposition generating substance of the photoreceptor and a curbazole derivative as an electrodeposition transporting substance. The results are shown in Table 2.

In Table 2, the "Charged amount" is a value of the charged amount per 1 g of toner measured according to the known blow-off method, and the "Coated amount" is the percentage by weight of the coating material obtained by removing the toner according to the blow-off method, dissolving the coating resin with acetone (at this time, the carbon fluoride particles were also removed from the carrier core), and evaporating the acetone.

### EXAMPLES 18, 19 and 20 and COMPARATIVE EXAMPLE 5

The developing agents were prepared in the same manner as in EXAMPLE 17 except that the carriers obtained in EXAMPLES 13, 14 and 15 and COMPARATIVE EXAMPLE 4 were used instead of the carrier obtained in EXAMPLE 12 (respectively, correspond to EXAMPLES 18, 19 and 20 and COMPARATIVE EXAMPLE 5), and the continuous copying was carried out.

The results are also shown in Table 2.

### EXAMPLE 21

100 parts by weight of a styrene-butyl methacrylate (7 : 30) copolymer, 10 parts by weight of carbon black [Regul 66R, available from Cabot Co., Ltd.] and 3.5 parts by weight of a low molecular weight polypropylene [Viscol 66P, available from Sanyo Kasei Kogyo Co., Ltd.] were admixed by means of a ball mill, and kneaded, pulverized and classified to obtain a toner having an average particle size of 9 µm.

2.5 parts by weight of the obtained toner and 100 parts by weight of the carrier obtained in EXAMPLE 15 were admixed to obtain a developing agent for electrostatic copying machine.

Then, the continuous copying test with 50,000 sheets was carried out by using an electrostatic copying machine equipped with a photoreceptor containing Se.

The results are also shown in Table 2.

**Table 2**

| | Initial stage | | Alter copying 50000 sheets | |
|---|---|---|---|---|
| | Charged amount (µm/g) | Coated amount by weight (%) | Charged amount (µc/g) | Coated amount by weight (%) |
| Ex.17 | + 27.5 | 2.32 | + 26.8 | 2.28 |
| Ex.18 | + 28.5 | 2.28 | + 28.3 | 2.23 |
| Ex.19 | + 35.3 | 2.18 | + 34.1 | 2.07 |
| Ex.20 | + 27.0 | 3.10 | + 24.8 | 2.85 |
| Ex.21 | - 21.5 | 2.30 | - 21.5 | 2.27 |
| Comp. Ex.5 | + 25.8 | 1.82 | + 13.7 | 1.09 |

### EXAMPLE 22

A roller (⌀ 50 mm) of aluminium was used as an electrically conductive core, and a surface of the roller was previously roughened by sand blasting.

To a PFA resin powder (average particle size 35 µm, sperical particle), the carbon fluoride particles obtained in EXAMPLE 7 were admixed in an amount of 1 % by weight and agitated. A surface of the roller was coated with the mixed powder at a thickness of 40 µm according to an electrostatic powder coating method, and then melt and sintered for 20 minutes in an electric furnace at 380°C.

The roller was set in the fixing part of the copying machine, and an image of a negatively charged toner which was formed according to an electrostatic copying method (the toner mainly comprising a styrene-acrylic resin and having an average particle size of 14 µm and a charged amount of -10 to 12 µC/g) was fixed at a roller surface temperature of 180°C. Occurence of the offset was observed. Non-occurence of any offset is represented by (○ ), and occurence of the offset even to a small extent is represented by (X).

In order to evaluate the occurence of the electrostatic offset, evaluation was also made in respect of the image of a positively charged toner (the toner mainly comprising a styrene-acrylic resin and having an average particle size of 14 µm and a charged amount of +10 to 12 µC/g).

Further, in order to evaluate the durability and the abrasion resistance as to the fixing roller, a paper-passing test with 50,000 sheets of A4 size was conducted. Occurence of the offset was evaluated every 10,000 sheets of paper, and after passing 50,000 sheets, the abrasion resistance was evaluated from a decrease of the resin thickness on the surface of the roller. The results of the above-mentioned evaluations are shown in Table 3.

### EXAMPLES 23 to 26

The same evaluations as in EXAMPLE 22 were carried out except that the amount of carbon fluoride particles to be added was changed to 5, 10, 20 and 30 % by weight, which correspond to EXAMPLES 23, 24, 25 and 26 respectively.

The results are also shown in Table 3.

**Table 3**

| | Kind of additives | Added amount (% by weight) | Occurence of offset | | | | Abraded amount |
|---|---|---|---|---|---|---|---|
| | | | Initial stage | | Durability (times) | | |
| | | | Negatively charged toner | Positively charged toner | Negatively charged toner | Positively charged toner | |
| Ex.22 | Carbon fluoride particles of Ex.7 | 1 | ○ | ○ | 50000 or more | 30000 to 40000 | 2 µm or less |
| Ex.23 | ditto | 5 | ○ | ○ | ditto | ditto | ditto |
| Ex.24 | ditto | 10 | ○ | ○ | ditto | ditto | ditto |
| Ex.25 | ditto | 20 | ○ | ○ | ditto | ditto | ditto |
| Ex.26 | ditto | 30 | ○ | ○ | ditto | ditto | ditto |

### COMPARATIVE EXAMPLES 6 to 10

A fixing roller was fabricated in the same manner as in EXAMPLES 22 to 26, except that the carbon fluoride particles were changed to the carbon fluoride particles obtained in COMPARATIVE EXAMPLE 1 in each case. The results are shown in Table 4.

It is clear that the conventional carbon fluoride suffers from the problem that, when using it for a positively charged toner, electrostatic offset occurs because it does not have an electric conductivity.

**Table 4**

| | Kind of additives | Added amount (% by weight) | Occurence of offset | | | | Abraded amount |
|---|---|---|---|---|---|---|---|
| | | | Initial stage | | Durability (times) | | |
| | | | Negatively charged toner | Positively charged toner | Negatively charged toner | Positively charged toner | |
| Comp. Ex.6 | Carbon fluoride particles of Com. EX. 1 | 1 | ○ | X | 50000 or more | - | 2 µm or less |
| Comp. Ex.7 | ditto | 5 | ○ | X | ditto | - | ditto |
| Comp. Ex.8 | ditto | 10 | ○ | X | ditto | - | ditto |
| Comp. Ex.9 | ditto | 20 | ○ | X | ditto | - | ditto |
| Comp. Ex.10 | ditto | 30 | ○ | X | ditto | - | 3 to 5 µm |

### COMPARATIVE EXAMPLES 11 to 15

A fixing roller was fabricated and evaluated in the same manner as in EXAMPLES 22 to 26 except that an unfluorinated thermal black (Sevacarb MTCI available from Columbian Carbon Co., Ltd.) was used as it is, instead of the carbon fluoride particles. The results are shown in Table 5.

It is clear that addition of the carbon inhibits the non-adhesive property of PFA, and therefore no function was exhibited with respect to both the positively charged toner and the negatively charged toner.

From the above-mentioned results, it is clear that, by using the carbon fluoride of the present invention, both for the positively charged toner and the negatively charged toner, the offset-preventing effect can be maintained for a long time.

**Table 5**

| | Kind of additives | Added amount (% by weight) | Occurence of offset | | | | Abraded amount |
|---|---|---|---|---|---|---|---|
| | | | Initial stage | | Durability (times) | | |
| | | | Negatively charged toner | Positively charged toner | Negatively charged toner | Positively charged toner | |
| Comp. Ex.11 | Untreated thermal black | 1 | X | X | - | - | - |
| Comp. Ex.12 | ditto | 5 | X | X | - | - | - |
| Comp. Ex.13 | ditto | 10 | X | X | - | - | - |
| Comp. Ex.14 | ditto | 20 | X | X | - | - | - |
| Comp. Ex.15 | ditto | 30 | X | X | - | - | - |

### EXAMPLES 27 to 31

50 grams of a typical electrically conductive carbon black, i.e. Kejhen Black (commercial name, available from Ketjen Black International Co., Ltd.; average particle size: 0.03 µm) was fluorinated in the same manner as in EXAMPLE 1 except that the reaction time was one hour.

The F/C as a whole and the F/C at the surface of the obtained carbon fluoride particles measured in the same manner as in EXAMPLE 1, were 0.09 and respectively 0.69.

By using the obtained carbon fluoride particles, the evaluation as to the fixing roller was conducted in the same manner as in EXAMPLES 22 to 25. The results are shown in Table 6.

The obtained carbon fluoride shows more excellent electric conductivity than the carbon fluoride of EXAMPLE 7 which is the fluorinated thermal black, and therefore it is clear that the durability with the positively charged toner is more excellent.

**Table 6**

| | Kind of additive | Added amount (% by weight) | Occurence of offset | | | | Abraded amount |
|---|---|---|---|---|---|---|---|
| | | | Initial stage | | Durability (times) | | |
| | | | Negatively charged toner | Positively charged toner | Negatively charged toner | Positively charged toner | |
| Ex.27 | Carbon particles of fluorinated Ketjen black | 1 | ○ | ○ | 50000 or more | 40000 to 50000 | 2 µm or less |
| Ex.28 | ditto | 5 | ○ | ○ | ditto | ditto | ditto |
| Ex.29 | ditto | 10 | ○ | ○ | ditto | ditto | ditto |
| Ex.30 | ditto | 20 | ○ | ○ | ditto | ditto | ditto |
| Ex.31 | ditto | 30 | ○ | ○ | ditto | ditto | ditto |

### COMPARATIVE EXAMPLES 16 to 20

A fixing roller was prepared in the same manner as in EXAMPLES 27 to 31 except that an unfluorinated Ketjen Black EC was used instead of the carbon fluoride particles, and the same evaluation was carried out. The results are shown in Table 7.

Although the electric conductivity is better than for the thermal black, the non-adhesive property is worse as in COMPARATIVE EXAMPLES 11 to 15.

**Table 7**

| | Kind of additive | Added amount (% by weight) | Occurence of offset | | | | Abraded amount |
|---|---|---|---|---|---|---|---|
| | | | Initial stage | | Durability (times) | | |
| | | | Negatively charged toner | Positively charged toner | Negatively charged toner | Positively charged toner | |
| Comp. Ex.16 | Untreated Ketjen black | 1 | ○ | ○ | 10000 to 20000 | 10000 to 20000 | 2 to 3 µm |
| Comp. Ex.17 | ditto | 5 | X | X | ditto | ditto | ditto |
| Comp. Ex.18 | ditto | 10 | X | X | ditto | ditto | ditto |
| Comp. Ex.19 | ditto | 20 | X | X | ditto | ditto | ditto |
| Comp. Ex.20 | ditto | 30 | X | X | ditto | ditto | ditto |

### EXAMPLES 32 to 36

In EXAMPLES 27 to 31, the PFA powder and the carbon fluoride particles were only mixed. In EXAMPLES 32 to 36, the PFA powder and the carbon fluoride particles were treated for 10 minutes by means of a hybridizer (NHS-O Type, available from Nara Kikai Seisakusho Kabushiki Kaisha) under a peripheral velocity of 80 m/s to give a composite powder, and then a powder coating was carried out by using the composite powder. The results are shown in Table 8.

The results shows more excellent properties than those of EXAMPLES 7 to 31. It is assumed that the mixing of carbon fluoride particles and PFA is extremely efficient even from microscopic observation, and therefore the electrostatic coating is uniformly carried out.

**Table 8**

| | Kind of additive | Added amount (% by weight) | Occurence of offset | | | | Abraded amount |
|---|---|---|---|---|---|---|---|
| | | | Initial stage | | Durability (times) | | |
| | | | Negatively charged toner | Positively charged toner | Negatively charged toner | Positively charged toner | |
| Ex.32 | Hybridized carbon fluoride particles of Ketjen black | 1 | ○ | ○ | 50000 or more | 50000 or more | 2 µm or less |
| Ex.33 | ditto | 5 | ○ | ○ | ditto | ditto | ditto |
| Ex.34 | ditto | 10 | ○ | ○ | ditto | ditto | ditto |
| Ex.35 | ditto | 20 | ○ | ○ | ditto | ditto | ditto |
| Ex.36 | ditto | 30 | ○ | ○ | ditto | ditto | ditto |

### EXAMPLE 37

120 grams of an acetylene black (Denka Black, available from Denki Kagaku Kogyo Kabushiki Kaisha, commercial name) was fluorinated in the same manner as in EXAMPLE 1 except that the reaction time was 2 hours to obtain carbon fluoride particles having a degree of fluorination as a whole of 0.18, a degree of fluorination at the surface of 0.92 and an average particle size of 0.042 µm.

The obtained carbon fluoride particles were dispersed and mixed with 30 parts by weight of a polytetrafluoroethylene (Polyflon Dispersion D-3, available from Daikin Industries, Ltd., commercial name), 2000 parts by weight of a surfactant (Triton X-100, 10 % aqueous solution) and 40 parts by weight of an acetylene black treated with HNO₃ by means of an ultrasonic homogenizer (frequency 38 KHz, rotation 1200 rpm). 8.4 parts by weight of H₂PtCℓ₆ was added and mixed therewith, and the mixture was dried according to a lyophilization method (temperature: -70°C → 80°C ). The obtained powder was heated at 300°C for 2 hours in an atmosphere of hydrogen and the surfactant was removed, and then 4 parts by weight of fine platinum particles were applied thereon.

Then the obtained platinum-carrying powder was packed into a press die, and a raw material of a supplying layer consisting of 70 parts by weight of the above-mentioned carbon fluoride particles and 30 parts by weight of the polytetrafluoroethylene was added thereon, and hot-pressed at 380°C under 600 kg/cm² for 3 seconds without stirring to obtain a reaction layer of a gas diffusion electrode having an area of 100 cm² and a thickness of 0.5 mm. The properties of the gas diffusion electrode are shown in Table 9.

### COMPARATIVE EXAMPLE 21

A gas diffusion electrode was prepared in the same manner as in EXAMPLE 37 except that an untreated acetylene black was used instead of the carbon fluoride particles of the present invention. The properties of the gas diffusion electrode are also shown in Table 9.

### COMPARATIVE EXAMPLE 22

A mixture of 30 parts by weight of a vinyl chloride resin (Denka Vinyl SS-119S, available from Denki Kagaku Kogyo Kabushiki Kaisha, commercial name), 100 parts by weight of an acetylene black and 180 parts by weight of water was granulated in a mixing and granulating machine, and dried. The granulates were supplied into an oven wherein N₂ was filled and kept at 1300°C, and sintered for 1 hour to obtain 109 parts by weight of a carbon powder. A gas diffusion electrode was prepared in the same manner as in EXAMPLE 37 except that the obtained carbon powder was used instead of the carbon fluoride particles of the present invention. The properties thereof are also shown in Table 9.

### COMPARATIVE EXAMPLE 23

A gas diffusion electrode was prepared in the same manner as in EXAMPLE 37 except that the carbon fluoride described in COMPARATIVE EXAMPLE 2 was used instead of the carbon fluoride particles of the present invention. The properties thereof are also shown in Table 9.

### COMPARATIVE EXAMPLE 24

12 grams of a graphite powder (SGP-25, available from Kabushiki Kaisha SEC, commercial name, average particle size 25 µm) were charged into a pressure resistive Monel reactor. After reducing the pressure to not more than 10 Pa, 8.0 g of flourine gas was introduced and the reactor was sealed. The temperature was raised from room temperature to 400°C at a rate of 5 °C /min, and kept at 400°C for 1 hour, and the reactor allowed to cool. After substituting the air in the reactor with nitrogen, the product was taken out. The degree of fluorination of the product as a whole was 0.19. A gas diffusion electrode was prepared in the same manner as in EXAMPLE 37 except that the obtained carbon fluoride was used instead of the carbon fluoride particles of the present invention. The properties are also shown in Table 9.

**Table 9**

| | Electric specific resistance (Ω · cm) | Gas permeability (10⁻³ml(0.5atmO₂)/cm·sec) |
|---|---|---|
| Ex.37 | 0.52 | 32.1 |
| Comp. Ex.21 | 0.40 | 20.0 |
| Comp. Ex.22 | 0.09 | 23.3 |
| Comp. Ex.23 | 1.86 | 35.8 |
| Comp. Ex.24 | 0.73 | 25.6 |

In COMPARATIVE EXAMPLE 21, although the value of the electric specific resistance is sufficient, the gas permeability is not sufficient because of lack in water-repelling property.

In COMPARATIVE EXAMPLE 22, both the water-repelling property and the electric specific resistance are improved because the graphite crystals in the carbon black particles were grown more than those of COMPARATIVE EXAMPLE 21. However, the water repelling property is not sufficient in comparison with the carbon fluoride particles of the present invention, and therefore only a limited improvement of the gas permeability is obtained. Furthermore, an additional problem is that, owing to the growth of the graphite crystals, the oxidation resistance and the corrosion resistance to an electrolytic solution become rather poor.

In COMPARATIVE EXAMPLE 23, a superior gas permeability is observed because of the excellent water-repelling property of the carbon fluoride. However, the carbon fluoride is an electrical insulator, and therefore the electric specific resistance becomes large.

In COMPARATIVE EXAMPLE 24, the excellent water-repelling property of carbon fluoride is not fully exhibited, and the gas permeability is inferior to that of COMPARATIVE EXAMPLE 23. The electric specific resistance is superior to that of COMPARATIVE EXAMPLE 23 because of the electric conductivity, but is inferior to those of COMPARATIVE EXAMPLES 21 and 22. In EXAMPLE 37, the gas permeability is equal to that of COMPARATIVE EXAMPLE 23 and the electric specific resistance is equal to that of COMPARATIVE EXAMPLE 21. The characteristics thereof are maintained for a long time, and it can be said that the gas diffusion electrode has superior performances in comparison with those of COMPARATIVE EXAMPLES 21 to 24.

### EXAMPLE 38

A water-repelling-treated carbon paper (available from Kureha Kagaku Kogyo Kabushiki Kaisha) was pressed and adhered to the gas diffusion electrode of EXAMPLE 37, and the obtained electrode was used as a fuel electrode and an oxygen electrode to produce a phosphoric acid fuel cell having the constitution shown in Fig. 1. In Fig. 1, 1 designates a matrix of 95 % of SiC and 5 % of PTFE with which 55 parts by weight of phosphoric acid was immersed, 2 designates a pipe to pass a heating medium, 3 designates a collecting plate, 4 designates a fuel electrode of the gas diffusion electrode of the present invention, and 5 designates an oxygen electrode as the same. The unit cell was 6 mm thick and hydrogen was used as a fuel gas, and then the characteristic of current density-cell voltage was measured when discharge at a constant current was done at an operation temperature of 190°C. The results are shown in Table 10.

### COMPARATIVE EXAMPLES 25 to 28

Phosphate-type fuel cells were prepared in the same manner as in EXAMPLE 38 except that the gas diffusion electrodes of COMPARATIVE EXAMPLES 21, 22, 23 and 24 were used instead of the gas diffusion electrode of EXAMPLE 37, and they were respectively represented as COMPARATIVE EXAMPLE 25, 26, 27 and 28. The results are also shown in Table 10.

**Table 10**

| | | Current density (mA/cm²) | | | |
|---|---|---|---|---|---|
| | | 50 | 100 | 200 | 400 |
| Cell Voltage (V) | Ex.38 | 0.91 | 0.89 | 0.86 | 0.81 |
| | Comp. Ex.25 | 0.85 | 0.78 | 0.74 | 0.55 |
| | Comp. Ex.26 | 0.87 | 0.84 | 0.79 | 0.65 |
| | Comp. Ex.27 | 0.89 | 0.86 | 0.81 | 0.71 |
| | Comp. Ex.28 | 0.88 | 0.85 | 0.79 | 0.69 |

The characteristic of current density-cell voltage of a fuel cell depends on both the electric specific resistance and the gas permeability of a gas diffusion electrode. Namely, when the electric specific resistance is high, as the current density increases, an increase in loss of voltage is noted according to the Ohm's law. When the gas permeability is low, as the current density increases, supplement of gas consumed by the electrode reaction delays, and there occurs a phenomenon that, when a specific current density is exceeded at a certain level, the cell voltage suddenly drops.

From the above, it can be understood that a cell voltage under a highly-loaded operation, namely a cell voltage at 400 mA/cm² in Table 10, is an indicator to compare the performance of the fuel cell. Table 10 shows that the fuel cell using the carbon fluoride particles of the present invention exhibits the highest cell voltage and has a superior performance. The reason is in that the carbon fluoride particles of the present invention have a high electric conductivity and a high water-repelling property, and therefore a gas diffusion electrode having a small electric specific resistance and a high gas permeability is obtained. In addition, these excellent properties can be maintained for a long time without degradation, and therefore labor and cost required for maintenance such as electrode-exchange can be extremely saved.

### EXAMPLE 39

The gas diffusion electrode of EXAMPLE 37 was pressed and adherred to a net of nickel, and the obtained electrode was used as an air electrode. A 4N-aqueous solution of sodium hydroxide was used as an electrolytic solution, and a zinc plate large enough not to be consumed during the evaluation was used as an anode. Thus a zinc/air battery was prepared.

The obtained battery was continuously discharged with a load of 75 Ω in an atmosphere of 60 % RH at a temperature of 20°C, and the time (life time) until the terminal voltage fell down to 0.9 V was measured. The results are shown in Table 11.

### COMPARATIVE EXAMPLES 29 to 32

Zinc/air batteries were prepared in the same manner as in EXAMPLE 39 except that the gas diffusion electrodes of COMPARATIVE EXAMPLES 21, 22, 23 and 24 were used instead of the gas diffusion electrode of EXAMPLE 37, and they were respectively represented as COMPARATIVE EXAMPLE 29, 30, 31 and 32. The results are also shown in Table 11.

**Table 11**

| | Life time (hour) |
|---|---|
| Ex.39 | 18.9 |
| Comp. Ex.29 | 10.1 |
| Comp. Ex.30 | 12.3 |
| Comp. Ex.31 | 14.2 |
| Comp. Ex.32 | 13.2 |

The role of a gas diffusion electrode in a zinc/air battery is the same as that in a fuel cell, and therefore the performance of the zinc/air battery corresponds to that of the phosphoric acid fuel cell in EXAMPLE 38. The value of the life time in the evaluation results of EXAMPLE 39 and COMPARATIVE EXAMPLES 29 to 32 substantially represents the degree of polarization property at a large load, because a zinc plate large enough was used as an anode.

As is clear from Table 11, the zinc/air battery wherein the carbon fluoride particles of the present invention were used shows a superior life time. It can be said that since the carbon fluoride particles of the present invention have a high electric conductivity and an high water-repelling property, a gas diffusion electrode having excellent properties at a large load can be provided.

### EXAMPLE 40

30 parts by weight of the same carbon fluoride particles as used in EXAMPLE 37 were dispersed in 100 parts by weight of a surfactant (Toriton X-100, 10 % aqueous solution) by means of an ultrasonic homogenizer.

Each of the metals lanthanum (La), nickel (Ni), cobalt (Co) and manganese (Mn) of a purity of not less than 99.5 %, and Mischmetal (Mm) which contains not less than 98 % of a rare earth element was weighed so that a uniform alloy La_{0.2}Mm_{0.8}Ni_{3.6}Co_{1.0}Mn_{0.4} alloy was prepared by means of a high-frequency heating furnace. The alloy in a fused state was dropped on a dish rotated at a high-speed of 20000 rpm in an inert gas atmosphere to obtain a spherical hydrogen-absorbing alloy powder having an average particle size of 60 µm. The powder was further immersed in an aqueous solution of potassium hydroxide (specific gravity: 1.30) at 80°C for 5 hours, rinsed and dried.

100 g of the powder was admixed with 25 g of a 2 % by weight of aqueous polyvinylalcohol solution, and kneaded to be pasty. A foamed porous nickel body having a porosity of 95 to 96 % was uniformly filled with the paste, and dried. Then, a pressure of 500 kg/cm² was applied and a nickel lead was spot-welded. The obtained article was immersed in the above-mentioned dispersion of carbon fluoride particles and dried to obtain an anode. As a cathode, there was used a known foamed metal having an excess electrical capacity, which was filled with nickel hydroxide. As an electrolytic solution, there was used an aqueous potassium hydroxide solution having a specific gravity of 1.20 in which lithium hydroxide was dissolved at 30 g/ℓ. As a separator, there was used a sulfonated nonwoven fabric of polypropylene. The anode, the cathode and the separator were coiled like a swirl, and put into a container of a C size cell. The electrolytic solution was poured, and the container was sealed to prepare a nickel/metal hydride storage battery of 3000 mAh.

The storage battery was charged under the constant temperature of 20°C, with a charging current of 300 mA for 15 hours in the first cycle of charge, with a charging current of 600 mA for 7.5 hours in the 2nd to 5th cycles of charge, and with a charging current of 1000 mA for 4.5 hours in and after the 6th cycle of charge. Discharge was carried out at 600 mA until the terminal voltage fell down to 0.9 V, and the cycle life time of the battery was examined. In addition, the bottom of the battery was opened, and a pressure sensor was inserted therein, and the internal pressure of the battery was measured. The results are shown in Table 12.

### COMPARATIVE EXAMPLE 23

A nickel/metal hydride storage battery was prepared and evaluated in the same manner as in EXAMPLE 40 except that a polytetrafluoroethylene dispersion (Polyflon Dispersion D-1, available from Daikin Industries, Ltd., commercial name) was used instead of the dispersion of carbon fluoride particles of the present invention. The results are also shown in Table 12.

### COMPARATIVE EXAMPLE 34

A nickel hydrogen storage battery was prepared and evaluated in the same manner as in EXAMPLE 40 except that the carbon fluoride particles of COMPARATIVE EXAMPLE 2 were used instead of the carbon fluoride particles of the present invention. The results are also shown in Table 12.

**Table 12**

| | At the 10th cycle | | At the 100th cycle | |
|---|---|---|---|---|
| | Peak internal pressure at charging (kg/cm²) | Discharge capacity (mAh) | Peak internal pressure at charging (kg/cm²) | Discharge capacity (mAh) |
| Ex.40 | 3.1 | 3032 | 5.7 | 3001 |
| Comp. Ex.33 | 5.5 | 3004 | 9.4 | 2650 |
| Comp. Ex.34 | 3.3 | 3018 | 6.5 | 2880 |

In COMPARATIVE EXAMPLE 33, the peak internal pressure at the 10th cycle of the charge is highest because the water-repelling property of the fluorine-containing resin is inferior to that of a carbon fluoride, and the degree of degradation at the 100th cycle of the charge is also remarkable, because the fluorine-containing resin is inferior in chemical stability.

In COMPARATIVE EXAMPLE 34, since the interface of the three layers can stably exist for a long time due to the excellent water-repelling and chemical stability of the carbon fluoride, the increase in internal pressure is restrained for a long time, and thus the cycle life time becomes longer than that of COMPARATIVE EXAMPLE 33.

In EXAMPLE 40, though, at the 10th cycle of charge, there was no remarkable difference with COMPARATIVE EXAMPLE 34 wherein the completely fluorinated carbon fluoride was used, the drop in voltage in discharging was slow because of the small internal resistance of the battery. As a result, the cycle life time becomes longer, which shows the utility of the present invention.

### INDUSTRIAL UTILITY

Since the carbon fluoride particles of the present invention have a low F/C as a whole, a high F/C at the surface, a low specific gravity and a narrow particle size distribution, the particles exhibit excellent dispersibility and powder flowability, and also have a controllable conductivity and charging characteristic. For example, dispersibility in composite materials such as resins, rubbers and greases is excellent. In addition, since the surface area is highly fluorinated in comparison with the inner portion, the particles have the inherent properties of the conventional carbon fluoride such as water-repelling property, oil-repelling property, non-adhesive property and lubricating property. Further, since the carbon fluoride particles of the present invention contain a smaller amount of fluorine, the particles can be produced at a lower cost than the prior carbon fluoride particles. Also, various composite materials can be provided.

Since the additive to toner shows excellent powder flowability and can be well dispersed into the toner, it is possible to reduce the amount of toner which would adhere to the carrier surface and to improve the cleaning of the toner which remains on the surface of the photoreceptor.

When using the additive as coating for carrier, the abrasion resistance and the toner-spent are excellent and the variation in charged amounts is narrow. Further, since the particle shape is spherical and uniform and the particle size distribution is narrow, the adhesion to the carrier is good and thus the particles are not broken and would not be peeled off from the carrier when abrading.

According to the fixing roller, both the electrostatic offset and hot offset do not appear, and these effects can be maintained for a long use.

Since the gas diffusion electrode of the present invention is excellent in gas permeability and has a low internal resistance, the performance at a high current density is particularly excellent. Further, the electrode has a long life time because of its excellent oxidation resistance and corrosion resistance.

The phosphoric acid fuel cell of the present invention allows a reduced decrease in cell voltage when operating at a high load and has a long life time.

The air battery of the present invention affords an excellent performance when operating at a high load and less degradation even when used for a long time.

The alkaline storage battery of the present invention is excellent in rapid charging and has a long life of charge-discharge time.

## Claims

1. Carbon fluoride particles with a number-average particle size from 0.01 to 50 µm, a content of particles having such a diameter that the particle size distribution thereof falls within the range of the number-average particle size ±20 %, amounting to at least 50 % of the whole, a true specific gravity of 1.7 to 2.5, an atomic ratio of fluorine to carbon F/C of the particle as a whole from 0.001 to 0.5, and a F/C ratio of the particle at the surface always larger than the F/C ratio as a whole and from 0.1 to 2.0.

2. The particles of Claim 1, wherein the F/C ratio as a whole is 0.001 to 0.3, and the F/C ratio at the surface is 0.3 to 2.0.

3. The particles of Claim 1, wherein the F/C ratio as a whole is 0.001 to 0.2, and the F/C ratio at the surface is 0.3 to 2.0.

4. The carbon fluoride particles of claim 1, 2 or 3, wherein the degree of sphericity defined by the quotient of the circumference of a circle, which has the same area of a projected image of a particle, over the circumference of the projected image of the particle, is within a range from 0.8 to 1.0.

5. A process for preparing the carbon fluoride particles of Claim 1, 2, 3 or 4 which comprises; pre-heating carbon particles with a number-average particle size of 0.01 to 50 µm and a content of particles having such a diameter that the particle size distribution falls within the range of the number-average particle size ±20 %, amounting to at least 50 % of the whole, to 350° to 600°C ; introducing a fluorine gas; and reacting the carbon particles with the fluorine gas at a temperature within said range.

6. Water- and oil-repellents comprising the carbon fluoride particles of Claim 1, 2, 3 or 4.

7. Non-tackifying agents comprising the carbon fluoride particles of Claim 1, 2, 3 or 4.

8. Solid lubricants comprising the carbon fluoride particles of Claim 1, 2, 3 or 4.

9. Agents for imparting electric conductivity comprising the carbon fluoride particles of Claim 1, 2, 3 or 4.

10. Additives to toner for developing electrostatic image, comprising carbon fluoride particles with a number-average particle size of 0.01 to 10 µm, a content of particles having such a diameter that the particle size distribution falls within the range of the number-average particle size ±20 %, amounting to at least 50 % of the whole, a true specific gravity of 1.7 to 2.5, a F/C ratio of the particles as a whole of 0.001 to 0.3, and a F/C ratio of the particle at the surface always larger than the F/C ratio as a whole and from 0.1 to 2.0.

11. The additives to toner for developing electrostatic image of Claim 10, wherein the number-average particle size is 0.1 to 10 µm.

12. The additives to toner for developing electrostatic image of Claim 10 or 11, wherein the F/C ratio as a whole is 0.001 to 0.2, and the F/C ratio at the surface is 0.3 to 2.0.

13. The additives to toner for developing electrostatic image of Claim 10, 11 or 12, wherein the degree of sphericity is 0.8 to 1.0.

14. Additives to coating of carrier for developing electrostatic image, comprising the carbon fluoride particles of Claim 1, 2, 3 or 4.

15. The additives to coating of carrier for developing electrostatic image of Claim 14, wherein the number-average particle size is 0.1 to 50 µm.

16. Composite materials in which the carbon fluoride particles of Claim 1, 2, 3 or 4 are added and dispersed into resins, rubbers, metals, ceramics, carbons, oils, organic solvents, water or aqueous solutions.

17. Composite materials in which the carbon fluoride particles of Claim 1, 2, 3 or 4 are added and dispersed into solid materials of resins, rubbers, metals, ceramics or carbons.

18. Composite materials in which the carbon fluoride particles of Claim 1, 2, 3 or 4 are added and dispersed into liquid materials of oils, organic solvents, water or aqueous slutions.

19. Composite materials in which the composite materials of Claim 16, 17 or 18 are in the form of film, paint, grease, toner, carrier or plating solution.

20. Fixing rollers coated with composite materials in which the carbon fluoride particles of Claim 1, 2, 3 and 4 are dispersed into resins or rubbers, or in the form of film or coating made of the composite materials.

21. Fine composite particles in which particles of resins, rubbers, metals, ceramics or carbons are coated with the carbon fluoride particles of Claim 1, 2, 3 or 4.

22. The fine composite particles according to claim 21 obtainable by impact-mixing or admixing by means of an impact surface improving machine or a high speed mixing tank (dry method).

23. A process for preparing fixing rollers which comprises electro-depositing the fine composite particles of Claim 21, and thereafter heat-treating to produce coatings.

24. Gas diffusion electrodes which comprise, a layer containing the carbon fluoride particles of Claim 1, 2, 3 or 4 or the composite materials of Claim 16, 17 or 21 is formed on the surface of the electrode.

25. Phosphoric acid fuel cells in which the gas diffusion electrode of Claim 24 is used.

26. Air batteries in which the gas diffusion electrode of Claim 24 is used.

27. Alkaline storage batteries in which an anode formed by using the carbon fluoride particles of Claim 1, 2, 3 or 4 or the composite materials of Claim 16, 17 or 21 is used.

## Patentansprüche

1. Kohlenstofffluoridteilchen mit einer Zahlenmittelwert-Teilchengrösse von 0,01 bis 50 µm, einem Gehalt an Teilchen mit einem solchen Durchmesser, dass die Teilchengrössenverteilung davon in den Bereich der Zahlenmittelwert-Teilchengrösse ± 20 % fällt, von wenigstens 50 % der Gesamtheit, einer tatsächlichen relativen Dichte von 1,7 bis 2,5, einem Atomverhältnis von Fluor zu Kohlenstoff F/C des ganzen Teilchens von 0,001 bis 0,5 und einem F/C-Verhältnis an der Oberfläche des Teilchens, das immer grösser ist als das Gesamt-F/C-Verhältnis und 0,1 bis 2,0 beträgt.

2. Teilchen gemäss Anspruch 1, worin das Gesamt-F/C-Verhältnis 0,001 bis 0,3 und das F/C-Verhältnis an der Oberfläche 0,3 bis 2,0 beträgt.

3. Teilchen gemäss Anspruch 1, worin das Gesamt-F/C-Verhältnis 0,001 bis 0,02 und das F/C-Verhältnis an der Oberfläche 0,3 bis 2,0 beträgt.

4. Kohlenstofffluoridteilchen gemäss Anspruch 1, 2 oder 3, worin der Grad der Sphärizität, definiert durch den Quotienten aus dem Umfang eines Kreises, der die gleiche Fläche des projizierten Bildes eines Teilchens hat, und dem Umfang des projizierten Bildes des Teilchens, innerhalb des Bereichs von 0,8 bis 1,0 ist.

5. Verfahren zur Herstellung der Kohlenstofffluoridteilchen gemäss Anspruch 1, 2, 3 oder 4, welches umfasst: Vorerhitzen von Kohlenstoffteilchen mit einer Zahlenmittelwert-Teilchengrösse von 0,01 bis 50 µm und einem Gehalt an Teilchen mit einem solchen Durchmesser, dass die Teilchengrössenverteilung in den Bereich der Zahlenmittelwert-Teilchengrösse ± 20 % fällt, von wenigstens 50 % der Gesamtheit auf 350 bis 600°C; Einleiten eines Fluorgases; und Umsetzen der Kohlenstoffteilchen mit dem Fluorgas bei einer Temperatur innerhalb des besagten Bereichs.

6. Wasser- und ölabweisende Mittel, umfassend die Kohlenstofffluoridteilchen gemäss Anspruch 1, 2, 3 oder 4.

7. Anti-Klebrigmacher, umfassend die Kohlenstofffluoridteilchen gemäss Anspruch 1, 2, 3 oder 4.

8. Feste Gleitmittel, umfassend die Kohlenstofffluoridteilchen gemäss Anspruch 1, 2, 3 oder 4.

9. Mittel zum Verleihen elektrischer Leitfähigkeit, umfassend die Kohlenstofffluoridteilchen gemäss Anspruch 1, 2, 3 oder 4.

10. Additive für Toner zur Entwicklung elektrostatischer Bilder, umfassend Kohlenstofffluoridteilchen mit einer Zahlenmittelwert-Teilchengrösse von 0,01 bis 10 µm, einem Gehalt an Teilchen mit einem solchen Durchmesser, dass die Teilchengrössenverteilung in den Bereich der Zahlenmittelwert-Teilchengrösse ± 20 % fällt, von wenigstens 50 % der Gesamtheit, einer tatsächlichen relativen Dichte von 1,7 bis 2,5, einem Gesamt-F/C-Verhältnis der Teilchen von 0,001 bis 0,3 und einem F/C-Verhältnis an der Oberfläche des Teilchens, das immer grösser ist als das Gesamt-F/C-Verhältnis und 0,1 bis 2,0 beträgt.

11. Additive für Toner zur Entwicklung elektrostatischer Bilder gemäss Anspruch 10, worin die Zahlenmittelwert-Teilchengrösse 0,1 bis 10 µm beträgt.

12. Additive für Toner zur Entwicklung elektrostatischer Bilder gemäss Anspruch 10 oder 11, worin das Gesamt-F/C-Verhältnis 0,001 bis 0,2 und das F/C-Verhältnis an der Oberfläche 0,3 bis 2,0 beträgt.

13. Additive für Toner zur Entwicklung elektrostatischer Bilder gemäss Anspruch 10, 11 oder 12, worin der Grad der Sphärizität 0,8 bis 1,0 beträgt.

14. Additive zur Beschichtung eines Trägers für die Entwicklung elektrostatischer Bilder, umfassend die Kohlenstofffluoridteilchen gemäss Anspruch 1, 2, 3 oder 4.

15. Additive zur Beschichtung eines Trägers für die Entwicklung elektrostatischer Bilder gemäss Anspruch 14, worin die Zahlenmittelwert-Teilchengrösse 0,1 bis 50 µm beträgt.

16. Verbundmaterialien, in denen die Kohlenstofffluoridteilchen gemäss Anspruch 1, 2, 3 oder 4 hinzugefügt und in Harzen, Kautschuken, Metallen, Keramiken, Kohlenstoffen, Ölen, organischen Lösungsmitteln, Wasser oder wässrigen Lösungen dispergiert sind.

17. Verbundmaterialien, in denen die Kohlenstofffluoridteilchen gemäss Anspruch 1, 2, 3 oder 4 hinzugegeben und in festen Materialien aus Harzen, Kautschuken, Metallen, Keramiken oder Kohlenstoffen dispergiert sind.

18. Verbundmaterialien, in denen die Kohlenstofffluoridteilchen gemäss Anspruch 1, 2, 3 oder 4 hinzugegeben und in flüssigen Materialien aus Ölen, organischen Lösungsmitteln, Wasser oder wässrigen Lösungen dispergiert sind.

19. Verbundmaterialien, in denen die Verbundmaterialien gemäss Anspruch 16, 17 oder 18 in Form von Film, Farbe, Schmiere, Toner, Träger oder Beschichtungslösung sind.

20. Fixierwalzen, beschichtet mit Verbundmaterialien, in denen die Kohlenstofffluoridteilchen gemäss Anspruch 1, 2, 3 und 4 in Harzen oder Kautschuken dispergiert sind, oder in Form eines aus den Verbundmaterialien hergestellten Films oder Überzugs.

21. Feine Verbundteilchen, in denen Teilchen aus Harzen, Kautschuken, Metallen, Keramiken oder Kohlenstoffen mit den Kohlenstofffluoridteilchen gemäss Anspruch 1, 2, 3 oder 4 beschichtet sind.

22. Feine Verbundteilchen gemäss Anspruch 21, erhältlich durch Turbomischen oder Zumischen mittels einer die Stossfläche verbessernden Maschine oder eines Hochgeschwindigkeits-Mischkessels (trockenes Verfahren).

23. Verfahren zur Herstellung von Fixierwalzen, welches die galvanische Abscheidung der feinen Verbundteilchen gemäss Anspruch 21 und nachfolgende Wärmebehandlung zur Herstellung von Überzügen umfasst.

24. Gasdiffusionselektroden, die eine auf der Elektrodenoberfläche gebildete Schicht umfassen, welche die Kohlenstofffluoridteilchen gemäss Anspruch 1, 2, 3 oder 4 oder die Verbundmaterialien gemäss Anspruch 16, 17 oder 21 enthält.

25. Phosphorsäure-Brennstoffzellen, in denen die Gasdiffusionselektrode gemäss Anspruch 24 verwendet wird.

26. Luftbatterien, in denen die Gasdiffusionselektrode gemäss Anspruch 24 verwendet wird.

27. Alkali-Speicherbatterien, in denen eine unter Verwendung der Kohlenstofffluoridteilchen gemäss Anspruch 1, 2, 3 oder 4 oder der Verbundmaterialien gemäss Anspruch 16, 17 oder 21 gebildete Anode verwendet wird.

## Revendications

1. Particules de fluorocarbone avec une dimension particulaire moyenne en nombre allant de 0,01 à 50 µm, une teneur en particules d'au moins 50 % de la totalité ayant un diamètre tel que leur répartition granulométrique se situe dans la plage définie par la dimension particulaire moyenne en nombre ± 20%, une densité absolue de 1,7 à 2,5, un rapport atomique fluor sur carbone F/C pour les particules entières allant de 0,001 à 0,5 et un rapport F/C à la surface des particules toujours supérieur au rapport F/C pour les particules entières et situé de 0,1 à 2,0.

2. Particules de la revendication 1, présentant un rapport F/C pour les particules entières de 0,001 à 0,3 et un rapport F/C à la surface de 0,3 à 2,0.

3. Particules de la revendication 1, présentant un rapport F/C pour les particules entières de 0,001 à 0,2 et un rapport F/C à la surface de 0,3 à 2,0.

4. Particules de fluorocarbone d'une des revendications 1, 2 ou 3, dans lesquelles le degré de sphéricité, défini par le quotient de la circonférence d'un cercle ayant la même surface que l'image projetée de la particule, sur la circonférence de l'image projetée de la particule, est situé dans une gamme de 0,8 à 1,0.

5. Procédé de préparation de particules de fluorocarbone selon l'une des revendications 1, 2, 3 ou 4, comportant les étapes suivantes : préchauffage des particules de carbone avec une dimension particulaire moyenne en nombre allant de 0,01 à 50 µm et une teneur en particules d'au moins 50% de la totalité ayant un diamètre tel que leur répartition granulométrique se situe dans la gamme de la dimension particulaire moyenne en nombre ± 20%, à une température de 350 °C à 600 °C ; introduction d'un gaz de fluor ; et réaction des particules de carbone avec le gaz de fluor à une température située dans ladite gamme.

6. Préparations hydrophobes et oléophobes contenant des particules de fluorocarbone d'une des revendications 1, 2, 3 ou 4.

7. Agents anti-adhésion contenant les particules de fluorocarbone d'une des revendications 1, 2, 3 ou 4.

8. Lubrifiants solides contenant les particules de fluorocarbone d'une des revendications 1, 2, 3 ou 4.

9. Agents pour conférer une conductivité électrique, contenant des particules de fluorocarbone d'une des revendications 1, 2, 3 ou 4.

10. Additif de toner pour le développement d'une image électrostatique, comprenant des particules de fluorocarbone avec une dimension particulaire moyenne en nombre allant de 0,01 à 10 µm, une teneur en particules d'au moins 50% de la totalité ayant un diamètre tel que leur répartition granulométrique se situe dans la gamme définie par la dimension particulaire moyenne en nombre ± 20%, une densité absolue de 1,7 à 2,5, un rapport F/C pour les particules entières allant de 0,001 à 0,3, et un rapport F/C à la surface des particules toujours supérieur au rapport F/C pour les particules entières et situé dans la gamme de 0,1 à 2,0.

11. Additifs de toner pour le développement d'une image électrostatique de la revendication 10, présentant une dimension particulaire moyenne en nombre de 0,1 à 10 µm.

12. Additifs de toner pour le développement d'une image électrostatique d'une des revendications 10 ou 11, dans lesquels le rapport F/C pour les particules entières est de 0,001 à 0,2 et le rapport F/C à la surface est de 0,3 à 2,0.

13. Additifs de toner pour le développement d'une image électrostatique d'une des revendications 10, 11 ou 12, dans lesquels le degré de sphéricité est de 0,8 à 1,0.

14. Additifs pour le revêtement d'un vecteur servant au développement d'une image électrostatique, contenant les particules de fluorocarbone d'une des revendications 1, 2, 3, ou 4.

15. Additifs pour le revêtement d'un vecteur servant au développement d'une image électrostatique de la revendication 14, dans lesquelles la dimension particulaire moyenne en nombre va de 0,1 à 50 µm.

16. Matériaux composites comprenant les particules de fluorocarbone d'une des revendications 1, 2, 3 ou 4, ajoutées et dispersées dans des résines, des caoutchoucs, des métaux, des céramiques, des carbones, des huiles, des solvants organiques, de l'eau ou des solutions aqueuses.

17. Matériaux composites comprenant les particules de fluorocarbone d'une des revendications 1, 2, 3 ou 4, ajoutées et dispersées dans les produits solides que sont les résines, les caoutchoucs, les métaux, les céramiques, ou les carbones.

18. Matériaux composites comprenant les particules de fluorocarbone d'une des revendications 1, 2, 3 ou 4, ajoutées et dispersées dans les produits liquides que sont les huiles, les solvants organiques, l'eau ou les solutions aqueuses.

19. Matériaux composites dans lesquels les matériaux composites d'une des revendications 16, 17 ou 18 se présentent sous la forme d'un film, d'une peinture, d'une graisse, d'un toner, d'un vecteur ou d'une solution pour la formation d'un revêtement.

20. Cylindres pour fixation couverts d'un revêtement en matériaux composites obtenus en dispersant des particules de fluorocarbone d'une des revendications 1, 2, 3 ou 4 dans une résine ou dans un caoutchouc ou portant une couche ou un film réalisé avec de tels matériaux composites.

21. Particules composites fines, obtenues en appliquant en revêtement sur des particules de résine, de caoutchouc, de métal, de céramique ou de carbone, des particules de fluorocarbone d'une des revendications 1, 2, 3 ou 4.

22. Particules composites fines de la revendication 21, susceptibles d'être obtenues par mélange dans un mélangeur à turbine ou avec un autre type de mélangeur amélioré à surface d'impact, ou encore par mélange à haute vitesse dans une cuve (procédé à sec).

23. Procédé de préparation de cylindres pour fixation, comprenant les étapes consistant à déposer par électrolyse les particules composites fines de la revendication 21, et ensuite à effectuer un traitement thermique pour produire le revêtement.

24. Electrodes à diffusion gazeuse comprenant une couche contenant les particules de fluorocarbone d'une des revendications 1, 2, 3 ou 4, ou les matériaux composites d'une des revendications 16, 17 ou 21, formée à la surface de l'électrode.

25. Cellules électrochimiques à acide phosphorique, dans lesquelles on utilise l'électrode à diffusion gazeuse de la revendication 24.

26. Piles à dépolarisation par l'air, dans lesquelles on utilise l'électrode à diffusion gazeuse de la revendication 24.

27. Accumulateurs alcalins, dans lesquels on utilise une anode formée en utilisant les particules de fluorocarbone d'une des revendications 1, 2, 3 ou 4, ou les matériaux composites d'une des revendications 16, 17 ou 21.
